# EUROPEAN PATENT SPECIFICATION

(11) **EP 3 640 127 B1**
(45) Date of publication and mention of the grant of the patent: **16.11.2022**
(21) Application number: 17913568.6
(22) Date of filing: 12.06.2017
(51) Int. Cl.: B62J 9/30, B62J 9/23, B62J 9/24, B62J 9/27, B62H 5/00

(54) **SADDLE-TYPE VEHICLE**
SATTELFAHRZEUG
VÉHICULE DU TYPE À SELLE

(43) Date of publication of application: 22.04.2020
(73) Proprietor: Honda Motor Co., Ltd., Tokyo 107-8556 (JP)
(72) Inventor: KIKUCHI Takehiko, Wako-shi Saitama 107-8556 (JP)
(74) Representative: Kiwit, Benedikt
(86) International application number: PCT/JP2017/021706
(87) International publication number: WO 2018/229844

(56) References cited:
- EP-A1- 2 500 246
- WO-A1-2017/072720
- IT-A1- MI20 121 405
- JP-A- 2005 178 629
- JP-A- 2008 285 065
- JP-U- H0 220 657
- JP-U- S57 119 054
- US-A1- 2015 367 902
- US-A1- 2015 367 902
- US-B2- 8 152 036
- US-B2- 9 056 641

## Description

### FIELD

The present invention relates to a saddled vehicle equipped with an onboard storage box such as a pannier box on the rear side of a vehicle body. Particularly, the present invention relates to a lock structure advantageously used with an onboard storage box such as a pannier box.

### BACKGROUND

Pannier boxes are onboard storage boxes. As a theft-prevention measure, some pannier boxes can be locked on the vehicle body with a lock mechanism including a key cylinder. A conventional lock mechanism includes: a lock lever; an engagement hook configured to engage with a vehicle body in accordance with a rotation of the lock lever; and a key cylinder set by a key operation to a lock position where the rotation of the lock lever is restricted and to an unlock position where the rotation of the lock lever is allowed. The key cylinder allows the key to be removed just in the lock position. This configuration of allowing the key to be removed just in the lock position prevents the user from forgetting about locking (see Patent Literature 1).

### CITATION LIST

### PATENT LITERATURE

Patent Literature 1: Japanese Unexamined Patent Application Publication No. 2013-95301

### BRIEF SUMMARY

### TECHNICAL PROBLEM

In the conventional lock mechanism, a cam of the key cylinder can rotate in the incomplete lock state where the lock lever has not fully been rotated to reach its lock position. Therefore, the key can be rotated in this state to attain the lock position on the key cylinder, and removed. That is, the conventional lock mechanism causes the user to misidentify the incomplete lock state as the complete lock state.

The prior-art document US 2015/367902 A1 discloses the features of the preamble of claim 1.

### SOLUTION TO PROBLEM

In order to solve the problem, a first aspect of the present invention provides a saddled vehicle including: a vehicle body frame; a seat (15) disposed behind the vehicle body frame; an onboard storage box (17, 18, 90) removably mounted around the seat; a box stay (30, 31, 93) fixed to a vehicle body side around the seat (15) for supporting the onboard storage box; and a lock mechanism (50) provided between the onboard storage box and the box stay. The lock mechanism (50) includes: a lock lever (51); a key cylinder (52) provided at the lock lever; a cam (75) mounted on the key cylinder and rotated by a key (74) inserted into the key cylinder (52); a lock plate (53) provided with a first lock hole (57) configured to engage with the cam and previously fixed to the onboard storage box side or the box stay (30, 31, 93) side; and an engaging part (77) provided at the lock lever (51) and configured to engage with the box stay. The lock lever (51) is rotatable between a lock position where the engaging part (77) engages with the box stay (30, 31, 93) and an unlock position where the engaging part disengages from the box stay. The key (74) is rotatable between a lock position on the key cylinder where the cam (75) engages with the first lock hole (57) by being rotated by a predetermined amount and an unlock position on the key cylinder where the cam (75) is rotated by less than the predetermined amount. When the key is operated to establish locking, the key becomes incapable of being removed from the key cylinder unless its rotated position attains the lock position on the key cylinder. The lock plate (53) partially includes an extension (78) extending to become spaced apart from the first lock hole (57) and projecting on a rotation path of the cam (75) in the unlock position of the lock lever (51). When the lock lever (51) is in the unlock position, the extension (78) projects on the rotation path of the cam (75) to cause the cam (75) to abut on the extension (78), preventing the key (74) to rotate to reach the lock position on the key cylinder (52).

In this configuration, when the onboard storage box (17, 18, 90) is fixedly engaged with the box stay (30, 31, 93), with the lock lever (51) being rotated to the lock position, i.e., the proper position, and the cam (75) of the key cylinder (52) being rotated by the key (74) to engage with the first lock hole (57) and the second lock hole (60) simultaneously, the lock mechanism (50) locks the state where the onboard storage box (17, 18, 90) is fixedly engaged with the box stay (30, 31, 93).

At the same time, the key cylinder (52) attains the lock position where the key (74) is allowed to be removed. Thus, the user can identify the complete lock state.

On the other hand, in the state where the lock lever (51) is in the unlock position, when the key cylinder (52) is rotated by the key (74), the cam (75) abuts on the extension (78) and cannot engage with the second lock hole (60). Thus, the key (74) cannot rotate to reach the lock position on the key cylinder (52) and the key (74) is incapable of being removed. This allows the user to clearly identify the incomplete lock state, thereby preventing the user from misidentifying the incomplete locking, i.e., the lock lever (51) being in the unlock position, as the complete locking of the lock mechanism (50).

Accordingly, by virtue of the key (74) being allowed to be rotated to reach the lock position on the key cylinder (52) to be removed only when the lock lever (51) attains the lock position, i.e., the proper position, the erroneous operation of the lock lever is prevented.

In a second aspect of the present invention, the lock plate (53) is fixed to the onboard storage box (17, 18, 90). The lock plate (53) rotatably supports the lock lever (51). The lock plate (53) rotatably supports an engagement lever (61) including an engaging piece (65) configured to engage with the box stay (30, 31, 93). The engaging part (77) engages with the engaging piece (65) when the lock lever (51) is in a proper engaging position where the lock lever (51) is in the lock position.

In this configuration, when the engagement lever (61) is rotated; the engaging piece (65) engages with the box stay (30, 31, 93); and the lock lever (51) is in the lock position, the lock lever (51) engages with the engaging piece (65) and stops the rotation. Thus, the engagement of the box stay (30, 31, 93) with the engaging piece (65) is maintained, whereby the onboard storage box (17, 18, 90) is fixedly engaged with the box stay (30, 31, 93) and locked.

In the first or second aspect, in a third aspect of the present invention, the onboard storage box is a pannier box (17, 18) removably mounted on each of right and left sides of the seat. The box stay is a pannier stay (30, 31) fixed to the vehicle body side on each of lateral sides of the seat (15).

In this configuration, when the pannier box (17, 18) is engaged with the pannier stay (30, 31) and the lock lever (51) is rotated to reach the lock position, rotating the key cylinder (52) by the key (74) the pannier box (17, 18) supported on each of the right and left sides of the vehicle body is locked.

By virtue of the key (74) being allowed to be rotated to reach the lock position on the key cylinder (52) and removed only when the lock lever (51) is in the lock position, i.e., the proper position, the erroneous operation of the lock lever is prevented.

In a fourth aspect of the present invention, the lock mechanism (50) couples between an upper part of the pannier stay (30, 31) and an upper part of the pannier box (17, 18), and disposed between the seat (15) and the pannier box (17, 18).

In this configuration, the lock mechanism (50) is housed in the space formed between the pannier box (17, 18) and the seat (15) and, hence, the lock mechanism (50) is disposed in a space-saving manner.

In a fifth aspect of the present invention, the pannier box (17, 18) is provided with a fitting part at its lower part configured to fit with a lower part (37) of the pannier stay (30, 31). The pannier box (17, 18) is rotatable in a right-left direction about the fitting part.

In this configuration, in mounting the pannier box (17, 18) on the pannier stay (30, 31), firstly, the lower part of the pannier box (17, 18) is fitted to the lower part (37) of the pannier stay (30, 31). In this state, about the fitting part at the lower part, the upper part of the pannier box (17, 18) is rotated. This easily sets the pannier box (17, 18) in the upright position, to be locked by the lock mechanism (50). Dismounting is performed in reverse order. In this case also, by the upper part of the pannier box (17, 18) being rotated about the lower part, the dismounting is easily performed. Accordingly, the pannier box (17, 18) can be mounted or dismounted without effort.

### ADVANTAGEOUS EFFECTS

According to the present invention, in engaging the onboard storage box with the box stay previously mounted on the vehicle body and locking by the lock mechanism, the cam of the key cylinder engages with the first lock hole and establishes the complete lock state only when the engaging part of the lock lever is in the lock position where it engages with the box stay. At this time, the key rotating the cam is allowed to be rotated to reach the lock position on the key cylinder to be removed.

When the lock lever is in the unlock position, the cam abuts on the extension and incapable of engaging with the first lock hole. Thus, the extension prevents rotation of the cam and, therefore, the key cannot be rotated to reach the lock position on the key cylinder to be removed, alerting the user to the incomplete locking.

Thus, the user is prevented from misidentifying the incomplete lock state as the complete lock state, and the erroneous operation of the lock lever is prevented. The onboard storage box is surely locked to the vehicle body, and prevented from theft.

### BRIEF DESCRIPTION OF DRAWINGS

FIG. 1 is a side view of a motorcycle of the present invention.
FIG. 2 is a rear view of the motorcycle.
FIG. 3 is a plan view of a rear part of the motorcycle.
FIG. 4 is a perspective view of a rear carrier and a rear frame in the range corresponding to FIG. 3.
FIG. 5 is a perspective view of right and left pannier boxes mounted on pannier stays.
FIG. 6 is an exploded perspective view of the pannier boxes and the pannier stays shown in FIG. 5.
FIG. 7 is an exploded perspective view of a support structure for a first pannier box.
FIG. 8 is a perspective view of a second pannier box and its vicinity as seen from an obliquely above point.
FIG. 9 is a perspective view showing the support for the second pannier box as seen from an obliquely below point.
FIG. 10 shows a lock mechanism of the second pannier box and its vicinity as seen from an inner point in terms of the vehicle body.
FIG. 11 is an illustration corresponding to FIG. 10 without the pannier stay.
FIG. 12 is a cross-sectional view taken along line 12-12 in FIG. 10.
FIGS. 13A and 13B are each an operation explanatory illustration of an extension of a lock plate and a lock lever.
FIGS. 14A1 to 14C2 are each an explanatory illustration for key operations on the key cylinder and corresponding operations of a lock part.
FIGS. 15A and 15B are each an explanatory illustration for the operations of the lock part.
FIG. 16 is a perspective view showing the right and left pannier boxes being coupled to each other.
FIGS. 17A and 17B are each a perspective view for describing mounting of a coupling member on the pannier boxes
FIG. 18 shows a variation of the coupling member.
FIG. 19 shows other variation of the coupling member.
FIG. 20 shows another variation of the coupling member.
FIG. 21 is a perspective view of the coupling member inserted in the lateral direction and engaged.

### DETAILED DESCRIPTION

In the following, with reference to the drawings, a description will be given of an embodiment. Note that, terms referring to directions such as front, rear, right, and left correspond to those in a vehicle to which the present invention is applied. As necessary, front is indicated by arrow Fr; rear is indicated by arrow Rr; left is indicated by arrow LH; and right is indicated by arrow RH in appropriate drawings. Also, the inner side (inside) may be indicated by arrow IN and the outer side (outside) by arrow OUT.

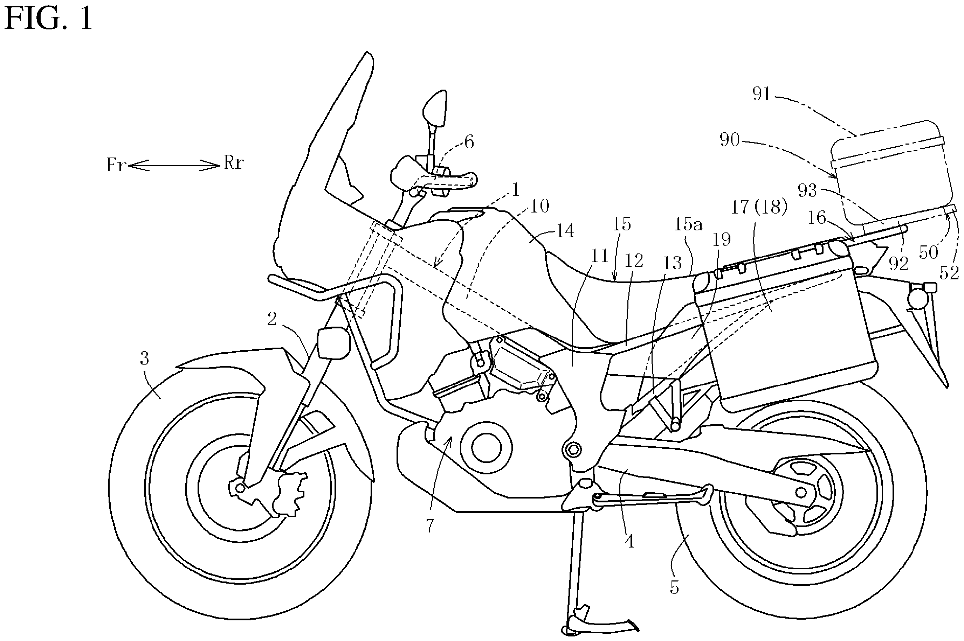

In FIG. 1, a motorcycle has a front wheel 3 supported on the front end of a vehicle body frame 1 through a front fork 2, and a rear wheel 5 supported on the rear side of the vehicle body frame 1 through a rear swingarm. The front wheel 3 is steered with handlebars 6. The rear wheel 5 is driven by an engine 7 supported on the vehicle body frame 1.

The vehicle body frame 1 includes: a main frame 10 extending rearward obliquely downward above the engine 7; a center frame 11 extending downward from the rear end of the main frame 10 behind the engine 7 and supporting the front end of the rear swingarm; a right and left pair of seat rails 12 extending rearward obliquely upward from an upper part of the center frame 11; and a back stay 13 coupling between a lower part of the engine 7 and rear parts of the seat rails 12. The seat rails 12 and the back stay 13 form a rear frame which is the rear part of the vehicle body frame.

A fuel tank 14 is supported on the main frame 10. A seat 15 is supported on the seat rails 12 behind the fuel tank 14.

The seat 15 is of a tandem type, and includes a front seat 15a for the driver and a rear seat 15b for the passenger.

A rear carrier 16 is disposed behind the seat 15. A first pannier box 17 is hung on the left side and a second pannier box 18 is hung on the right side below the rear seat 15b. As seen in a side view, the upper surface of the first pannier box 17 and the upper surface of the seat 15 are flat and flush with each other (the same holds true for the second pannier box 18).

The first pannier box 17 and the second pannier box 18 are exemplary onboard storage boxes of the present invention, which are each box-like having its top opened and configured to store any article onboard. The first pannier box 17 and the second pannier box 18 are each made of light alloy such as aluminum alloy, featuring a lightweight and sturdy structure. The pannier boxes are also referred to as pannier cases, side boxes, side bags, side trunks and the like. In the following, a description will be given of the first pannier box 17 and the second pannier box 18 as the onboard storage boxes.

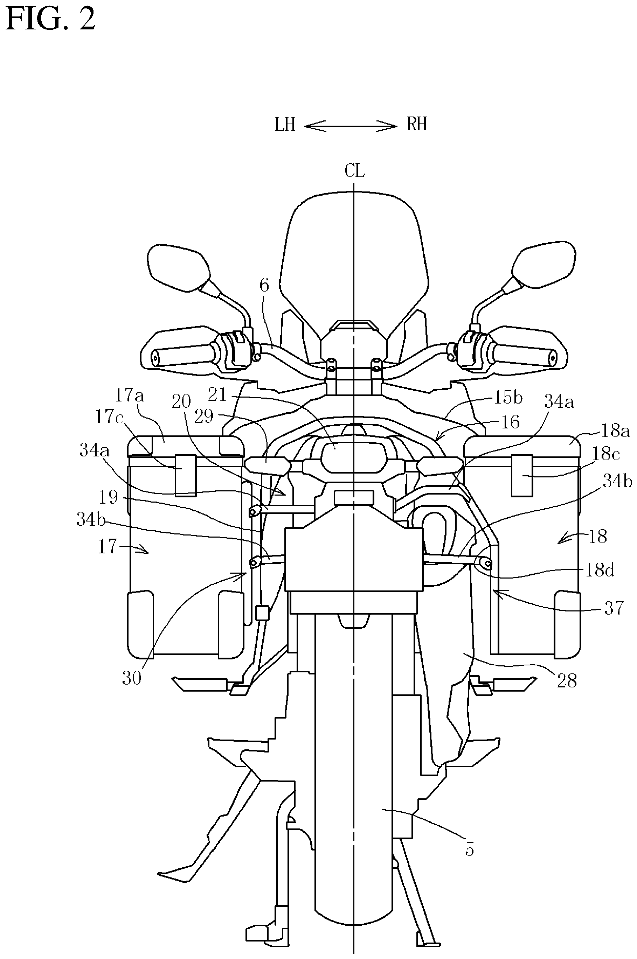

As shown in FIG. 2, the vehicle body below the seat 15 has its right and left side covered with side covers 19, and has its part above the rear wheel 5 covered with a rear fender 20.

A tail lamp 21 is provided at the rear end of the rear fender 20. Rear turn signal lamps 29 are provided on the right and left sides of the tail lamp 21.

The first pannier box 17 and the second pannier box 18 are hung separately on the left and right sides, respectively, with reference to the rear carrier 16.

The pannier boxes are required to be great in capacity while reduced in dimension in vehicle width direction. Therefore, the pannier boxes are each vertically elongated and rectangular prism-shaped. The pannier boxes are respectively provided with lids 17a, 18a which upwardly openably closes their respective openings. The lids 17a, 18a are fixed to or released from the body of the pannier boxes with buckles 17c, 18c. The buckles 17c, 18c are locked or unlocked with a key 74 used in exerting operations on a lock mechanism 50, which will be described later.

A muffler 28 is disposed on the right side of the rear wheel 5. The muffler 28 extends rearward on the lateral side of the rear wheel 5 obliquely upward. Therefore, the inner lateral surface of the second pannier box 18 forms a clearance recess 18d by which substantially lower half of the second pannier box 18 is reduced in dimension in vehicle width direction, to keep clear of the muffler 28.

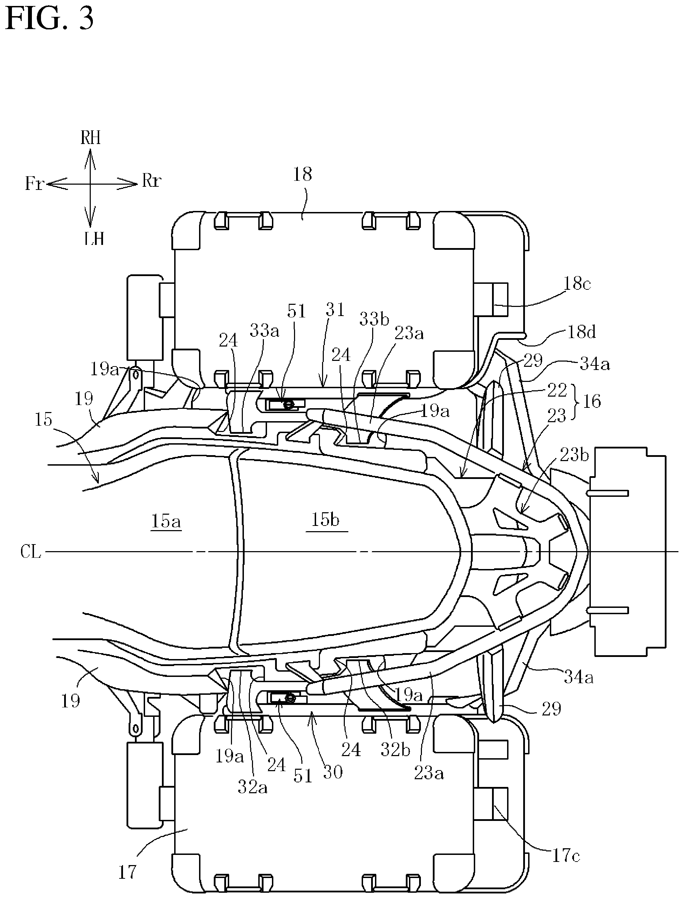

FIG. 3 is a plan view of a rear part of the vehicle body mainly showing the rear carrier 16.

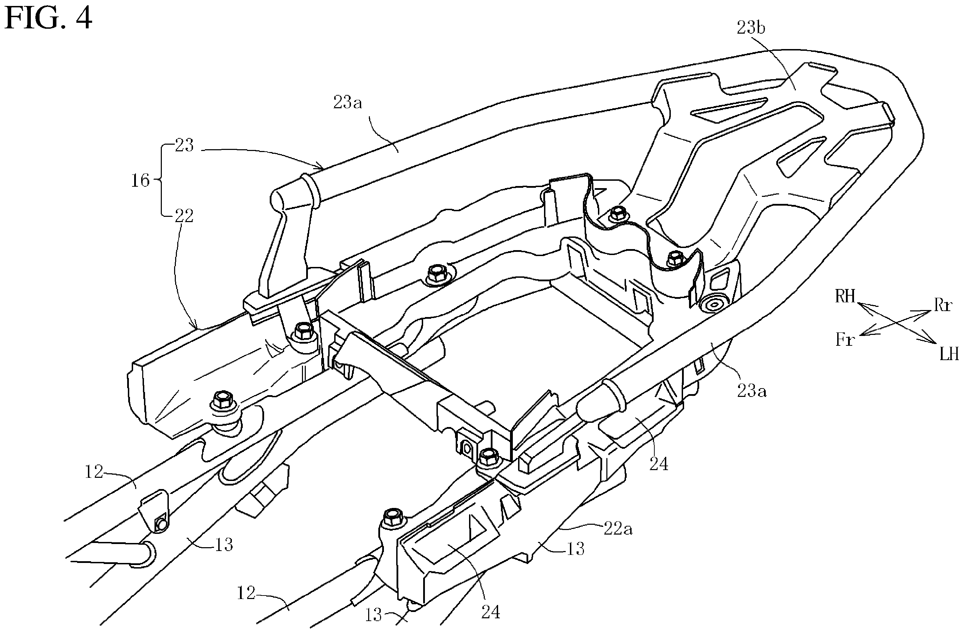

The rear carrier 16 is made up of a carrier bracket 22 (see FIG. 4) made of resin and a carrier body part 23 made of metal.

The carrier body part 23 is greater in size than the carrier bracket 22, and substantially U-shaped as seen in a top view along the rear contour of the carrier bracket 22.

In the carrier body part 23, those parts on the right and left sides of the rear seat 15b form rear grips 23a. The rear part of the carrier body part 23 extends rearward further than the rear seat 15b, where a baggage receiver 23b formed of a metal plate is integrated.

At upper parts in the side covers 19 on the lateral sides of the seat 15, front and rear windows 19a are formed. Upper engagement recesses 24 (see FIG. 4) are formed so as to respectively correspond to the windows 19a. The upper engagement recesses 24 are provided in a front and rear pair at an upper part in each outer lateral surface of the carrier bracket 22. With the upper engagement recesses 24, upper hooks 32a, 32b and 33a, 33b provided at upper parts of pannier stays 30, 31 supporting the first pannier box 17 and the second pannier box 18 are engaged, respectively.

FIG. 4 is a perspective view of the rear carrier 16 and the rear frame in the range corresponding to FIG. 3.

The carrier bracket 22 is substantially U-shaped as seen in a top view including right and left parts overlaid on the right and left seat rails 12. These right and left parts are fixed with bolts to the seat rails 12. The carrier body part 23 is fixed with bolts to the carrier bracket 22 whereby indirectly mounted on the seat rails 12. This configuration allows the vehicle body frame to exhibit proper stiffness while being flexible to a suitable degree.

With the right and left parts of the carrier bracket 22, the front and rear spaced-apart upper engagement recesses 24 are integrated.

The upper engagement recesses 24 are positioned to correspond to the windows 19a (FIG. 3) at the side covers 19 which are not shown. The upper engagement recesses 24 are provided at intervals corresponding to those of the upper hooks 32a, 32b and the upper hooks 33a, 33b each in a shape of a quadrangular hole opening upward. The shape of the opening of each upper engagement recess 24 is substantially rectangular or trapezoidal and relatively great in size.

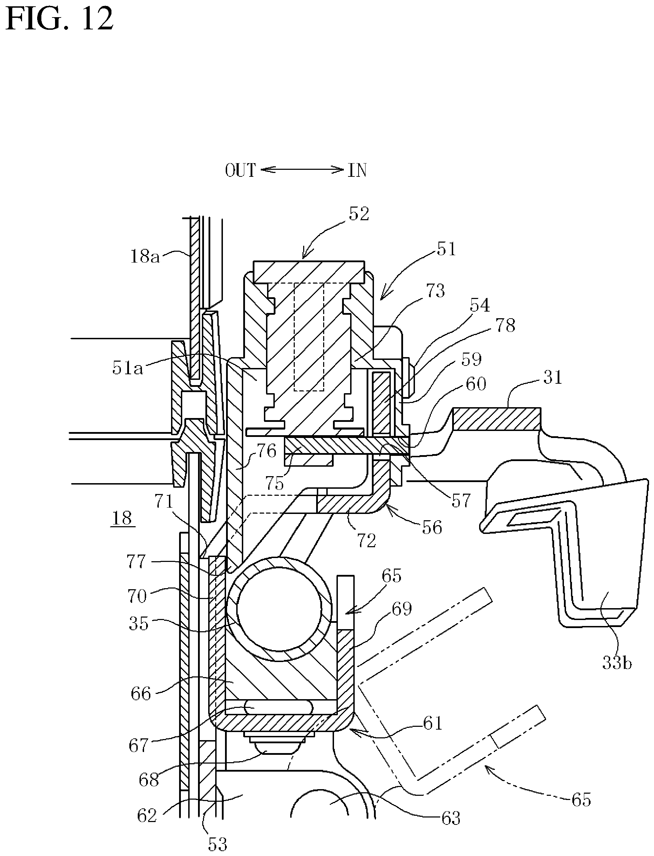

The upper hooks closely fitted into the upper engagement recesses 24, for example, the upper hook 32a (and other upper hooks) is formed of resin to have a similar shape and substantially similar dimension. Note that, the peripheral wall surface is tapered so as to be inclined in the fitting direction. A slot extending in parallel with the fitting direction is formed at part of the wall surface (see FIG. 12). This facilitates fitting the upper hook 32a to the upper engagement recess 24.

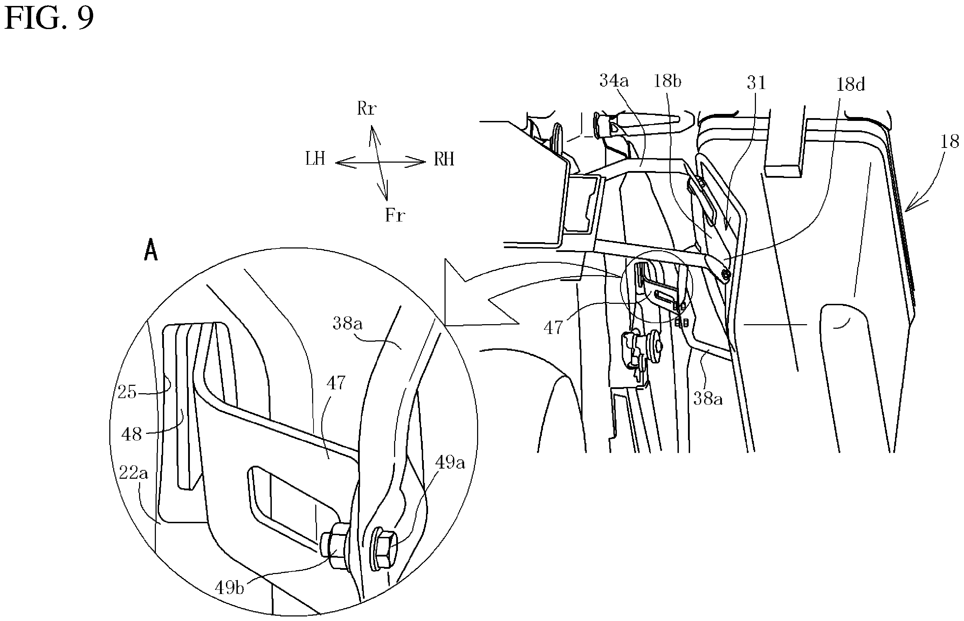

On the carrier bracket 22, the front ends of the rear grips 23a are mounted each between the front and rear upper engagement recesses 24. The rear part of the carrier body part 23 is mounted on the rear end of the carrier bracket 22. In the carrier bracket 22, an intermediate portion 22a between the front and rear upper engagement recesses 24 is provided with a lower engagement recess 25 (see FIG. 9) which will be described later.

Next, a description will be given of a configuration for supporting each pannier box on the vehicle body (the rear carrier 16). As shown in FIG. 3, the first pannier box 17 and the second pannier box 18 are respectively supported on the pannier stays 30, 31. The pannier stays 30, 31 are engaged with the front and rear upper engagement recesses 24 provided at the carrier bracket 22 by their upper hooks 32a, 32b and 33a, 33b projecting from the upper parts of the pannier stays 30, 31 into the vehicle body.

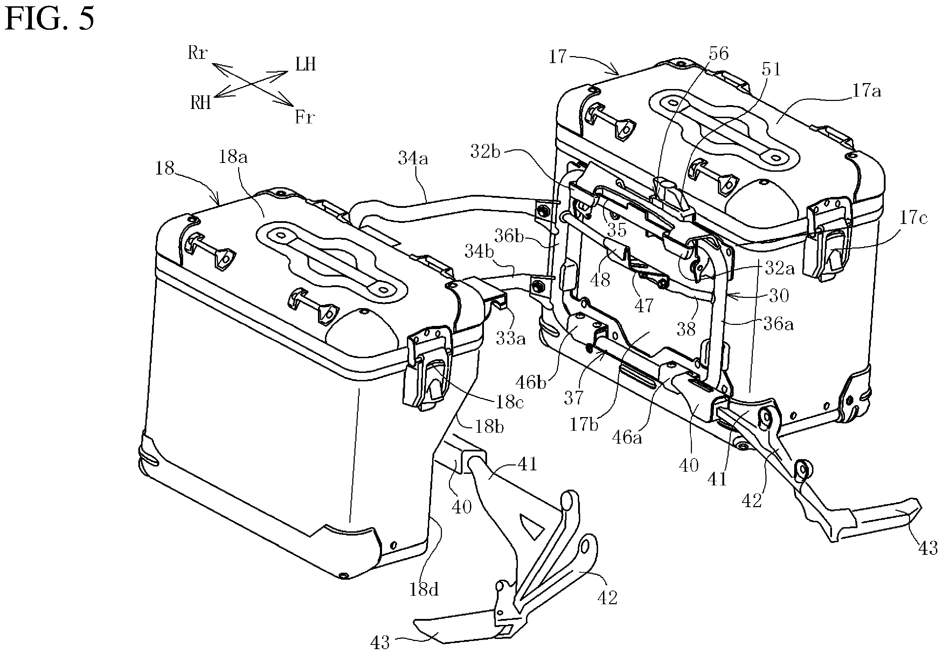

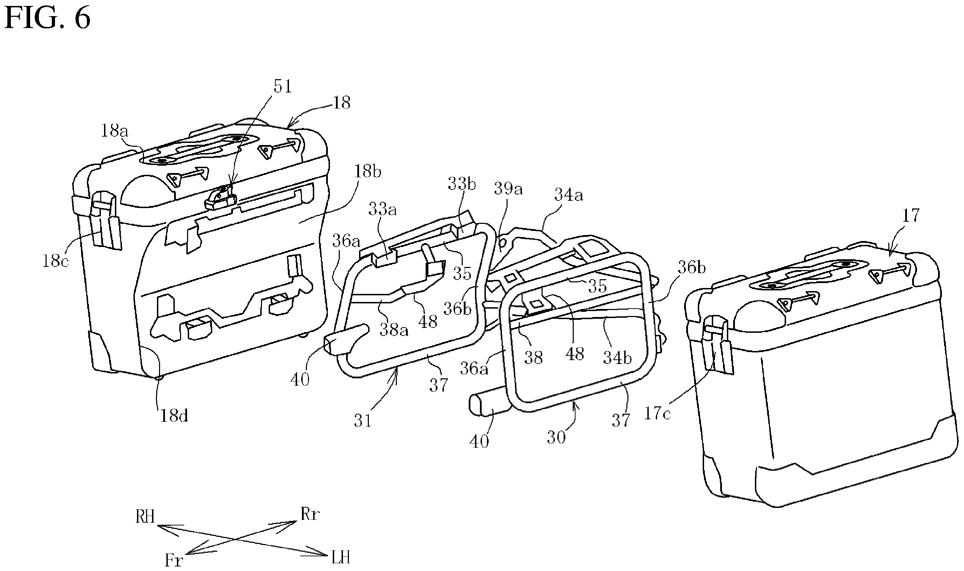

FIG. 5 is a perspective view showing the first pannier box 17 and the second pannier box 18 coupled and integrated with the right and left pannier stays 30, 31 when mounted on a vehicle. FIG. 6 is a perspective view showing the separated first pannier box 17 and second pannier box 18. As shown in FIGS. 5 and 6, the first pannier box 17 and the second pannier box 18 are supported by engagement with the pannier stays 30, 31 supported on the vehicle body frame. The right and left pannier stays 30, 31 are integrally coupled to each other with cross pipes 34a, 34b.

The cross pipes 34a, 34b extend below the fender rear part 20b to couple the right and left pannier stays 30, 31 to each other.

The first pannier box 17 is engaged with the pannier stay 30 by its inner lateral surface 17b.

The second pannier box 18 is similarly engaged with the pannier stay 31 by its inner lateral surface 18b.

The inner lateral surface 18b of the second pannier box 18 forms the clearance recess 18d for avoiding interference with the muffler. With the clearance recess 18d, the lower half of the inner lateral surface 18b of the second pannier box 18 is set toward the vehicle outer side to form clearance for the muffler. That is, the width in the vehicle lateral direction is smaller at the bottom part than the upper part.

Note that, as seen in a top view, the first pannier box 17 and the second pannier box 18 are similar in size (see FIG. 3). The first pannier box 17 and the second pannier box 18 are identical to each other in right-left width, front-rear width, and top-bottom height. In this regard, the first pannier box 17 and the second pannier box 18 have symmetry in contour. That is, the first pannier box 17 and the second pannier box 18 project by an identical amount rightward and leftward, frontward and rearward, and upward.

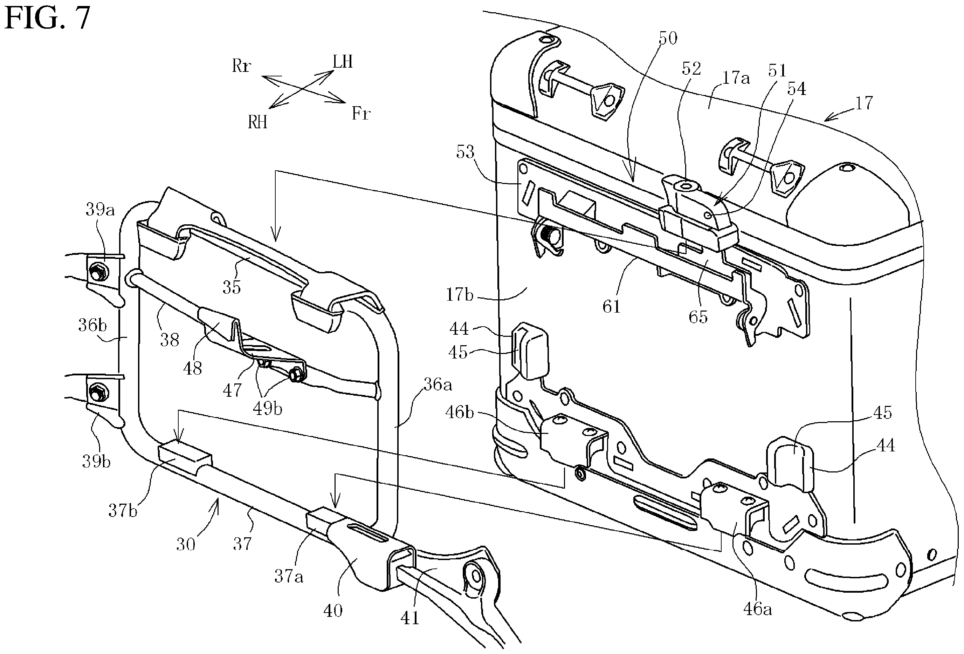

FIG. 7 is a perspective view showing the pannier stay 30 as being spaced apart from the inner lateral surface 17b of the first pannier box 17 disposed on the left side of the vehicle body. The second pannier box 18 disposed on the right side of the vehicle body and its associated structure are similarly configured. Accordingly, similar parts between the first pannier box 17 disposed on the left side of the vehicle body and the second pannier box 18 disposed on the right side of the vehicle body are denoted by identical reference characters.

The lock mechanism 50 is provided at an upper part in the inner lateral surface 17b of the first pannier box 17. The lock mechanism 50 includes a lock lever 51, a key cylinder 52 provided at the lock lever 51, and a lock plate 53.

The lock plate 53 is provided at an upper part in the inner lateral surface 17b. The lock lever 51 is rotatably mounted on the lock plate 53 through a pivot shaft 54. By the user locking, using the key cylinder 52, the first pannier box 17 engaged with the pannier stay 30, the first pannier box 17 is locked so as not to be removable from the pannier stay 30. Details of the lock mechanism 50 will be described later.

The same holds true for the second pannier box 18. Identical reference characters are used for the right and left lock mechanisms 50.

Guides 44 are provided respectively on the front and rear sides in the intermediate part in the top-bottom direction in the inner lateral surface 17b.

Each guide 44 is provided with a vertical groove 45 which is substantially U-shaped as seen in a cross-sectional view and extends in the top-bottom direction. Into the vertical grooves 45, lateral sides 36a, 36b are respectively fitted.

Lower hooks 46 are provided as lower hooks 46a, 46b respectively at the front and rear sides in a lower part of the inner lateral surface 17b. The cross-sectional shape of the lower hooks 46a, 46b is inverted U-shaped opening downward, which allows the lower hooks 46a, 46b to engage from above with mounts 37a, 37b provided on the front and rear sides in a lower side 37. By the lower hooks 46a, 46b engaging with the lower side 37, the lower part of the pannier box 17 is engaged with the lower side 37.

The pannier stay 30 is made of a metal pipe and substantially quadrangular, in which a substantial quadrilateral is formed by an upper side 35, the lateral sides 36a, 36b, and the lower side 37. The front and rear lateral sides 36a, 36b are coupled to each other by an intermediate stay 38. The right pannier stay 31 is different from the left pannier stay 30 in the shape of the intermediate stay 38 which is substantially L-shaped to couple between the intermediate part in the front-rear direction in the upper side 35 and the front lateral side 36a.

A sub-stay 47 is fixed by bolts to an intermediate part in the front-rear direction of the intermediate stay 38. Bracket 39a, 39b are provided at the lateral side 36b on the rear side of the sub-stay. To the bracket 39a, 39b, left ends of the cross pipes 34a, 34b are respectively fixed by bolts. The cross pipes 34a, 34b are removably mounted on the pannier stays 30, 31.

On the front and rear sides in the lower side 37, the mounts 37a, 37b whose cross-sectional shape is enlarged quadrangular are provided.

At the front end of the lower side 37, a joint 40 whose cross-sectional shape is inverted U-shaped opening downward is provided. The joint 40 couples the lower side 37 to a holder extension 41. The holder extension 41 is a portion extending rearward from a footrest holder 42. By the joint 40 externally fitting to the holder extension 41 from above, the joint 40 and the holder extension 41 are integrated. The holder extension 41 extends rearward from the footrest holder 42.

Note that, the joint 40 on the right pannier stay 31 is provided at a lower part in the front lateral side 36a of the pannier stay 31 (see FIG. 6).

As shown in FIG. 5, the footrest holder 42 is substantially V-shaped, and has its upper ends coupled to the back stay 13 (see FIG. 1), from where the footrest holder 42 extends downward. To the lower end, a pillion step 43 which is the footrest for the passenger is attached. By being fastened to the back stay 13, the footrest holder 42 forms part of the vehicle body frame (the back stay 13). As a result, the holder extension 41 also forms part of the vehicle body frame.

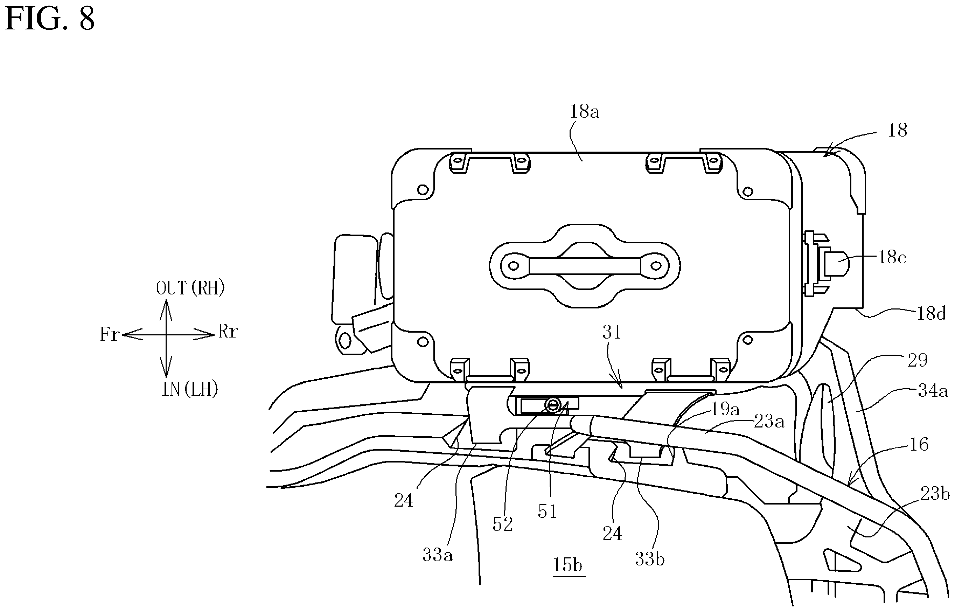

FIG. 8 is an illustration showing the second pannier box 18 mounted on a vehicle and its vicinity as seen from an obliquely above point. FIG. 9 is an illustration showing the second pannier box 18 mounted on a vehicle and its vicinity as seen from an obliquely below point. An encircled part A in FIG. 9 shows the engaged sub-stay 47 in an enlarged manner.

As shown in FIG. 8, the second pannier box 18 is similarly supported on the pannier stay 31 whose upper part is engaged with the upper engagement recess 24 of the carrier bracket 22 by the upper hooks 33a, 33b.

The rear grip 23a is overlaid on the pannier stay 31 and inclined rearward so as to approach the vehicle body center line CL. Accordingly, space is formed between the front part of the rear grip 23a and the pannier box 18. Using this space, the lock lever 51 is efficiently housed between the seat 15 and the second pannier box 18, more specifically, between the front part of the rear grip 23a and the pannier box 18. The lock lever 51 being housed in this space eliminates the space as seen in a top view. This improves appearance.

The sub-stay 47 for the second pannier box 18 is similarly configured. A description thereof is given with reference to FIG. 9. As shown in the encircled part in an enlarged manner in FIG. 9, the sub-stay 47 extends obliquely upward from the intermediate stay 38a toward the vehicle body inner side. The leading part of the sub-stay 47 bends upward and then has its tip bent downward, to form a fuse hook 48 whose cross-sectional shape is substantially inverted U-shaped. The fuse hook 48 is inserted into and engaged with the lower engagement recess 25 which opens downward at the lower part 22a (see FIG. 4) of the carrier bracket 22.

The fuse hook 48 engaging with the lower engagement recess 25 enhances the fixing of the pannier stay to the vehicle body side, and also functions as the shock-absorbing structure when the vehicle body accidentally rolls over. That is, when the vehicle body accidentally rolls over and great force is applied to the pannier box, the substantially U-shaped portion of the fuse hook 48 as seen in a cross-sectional view deforms to absorb the force. Thus, the fuse hook 48 functions as a shock-absorbing structure and allows deformation of just the sub-stay 47 while keeping other portions (e.g., the pannier stay, the carrier bracket 22 and the like) intact. Accordingly, when the sub-stay 47 deforms due to the vehicle accidentally rolling over, just replacing the sub-stay 47 will suffice. Thus, the present disclosure facilitates repairs and reduces repair costs.

The basal part of the sub-stay 47 is fastened to the intermediate stay 38a by a bolt 49a and a nut 49b. The fuse hook 48 is inserted into the lower engagement recess 25, and the bolt 49a is fasted externally (from the pannier box side) relative to the basal part of the sub-stay 47 to the nut 49b disposed on the inner side in terms of the vehicle body. Thus, the bolt 49a is covered with the pannier box 18 when the pannier box is mounted on the pannier stay 31 and, therefore, prevented from being unfastened.

The same holds true for the sub-stay 47 on the left pannier stay 30. The basal part of the sub-stay 47 is inserted into the intermediate stay 38, and the fuse hook 48 is inserted into and engages with the lower engagement recess 25 of the carrier bracket 22.

The right and left pannier stays 30, 31 are mounted on the vehicle body side prior to mounting the first pannier box 17 and the second pannier box 18. In relation to the left pannier stay 30, the upper hooks 32a and 32b are aligned with the upper engagement recesses 24, and the joint 40 is put on the holder extension 41 of the footrest holder 42. In this state, the whole structure is pushed down. Thus, the upper hooks 32a and 32b are inserted into and engaged with the upper engagement recesses 24, and the joint 40 fits with the holder extension 41.

Subsequently, the fuse hook 48 of the sub-stay 47 is fitted into the lower engagement recess 25, and the basal part of the sub-stay 47 is fixedly fastened to the intermediate stay 38 by the bolt 49a and the nut 49b. Thus, the left pannier stay 30 is supported on the vehicle body side by being engaged at four locations.

The right pannier stay 31 is mounted on the vehicle body in a similar manner.

The first pannier box 17 and the second pannier box 18 are engaged with thereby supported on the pannier stays 30, 31 supported on the vehicle body. The engagement includes: inserting and engaging, from above, the lower hooks 46a, 46b provided at lower parts of the pannier boxes into and with the mounts 37a, 37b provided at the lower sides 37 of the pannier stays; and engaging the upper sides 35 with engagement levers (described later) provided at the lock plates, respectively. Thereafter, by the lock mechanisms 50 locking the engagement levers, the first pannier box 17 and the second pannier box 18 become incapable of being removed from the pannier stays 30, 31.

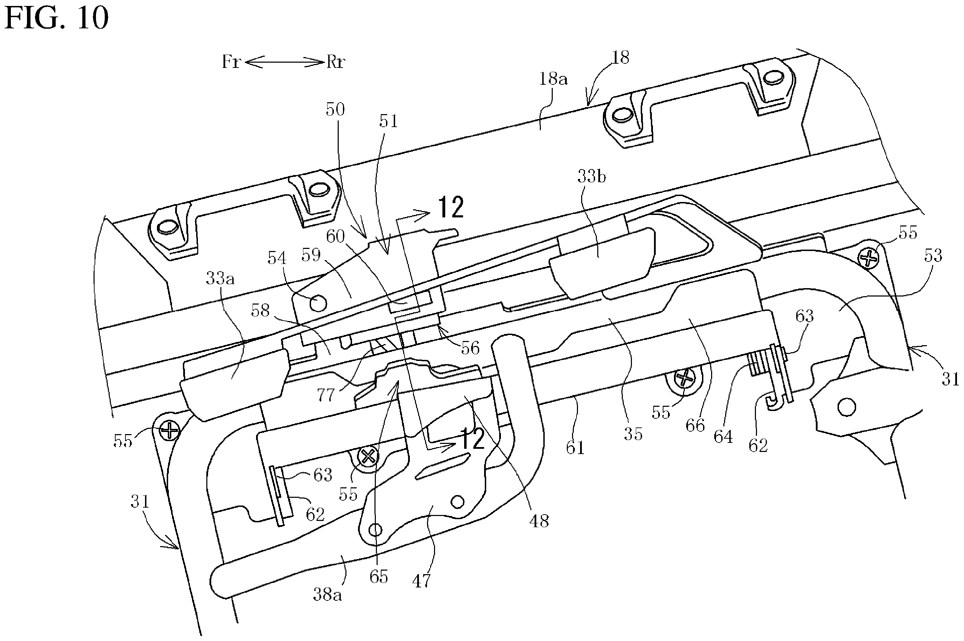

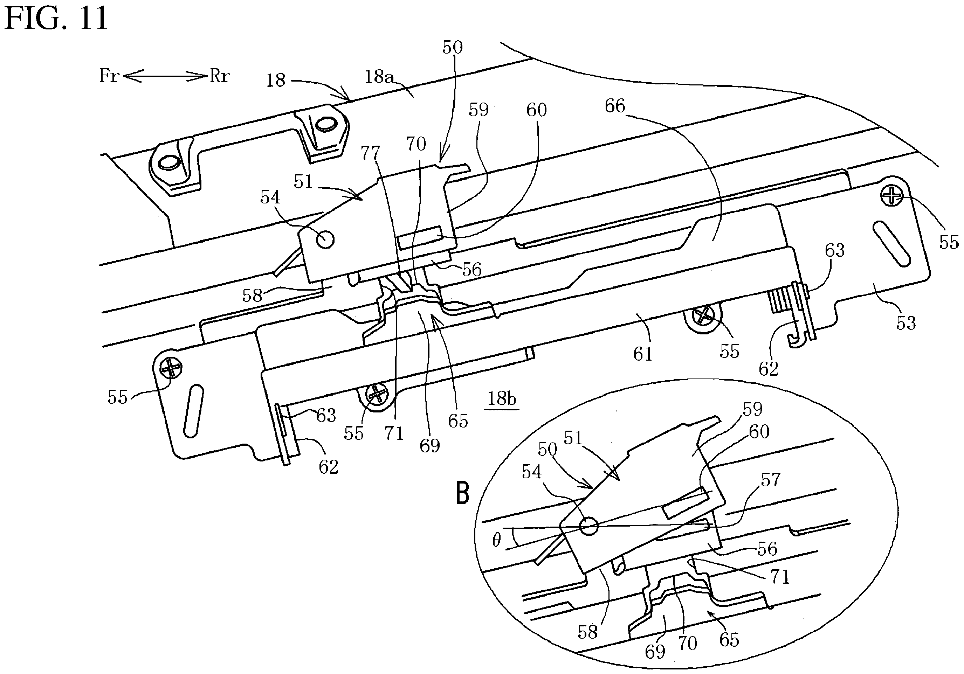

Next, the lock mechanism 50 will be detailed. FIG. 10 shows the lock mechanism 50 of the second pannier box 18 and its vicinity as seen from an inner point in terms of the vehicle body. FIG. 11 is an illustration corresponding to FIG. 10 without the pannier stay 31. An encircled part B in FIG. 11 shows the lock lever 51 being rotated to reach its unlock position. FIG. 12 is a cross-sectional view taken along line 12-12 in FIG. 10.

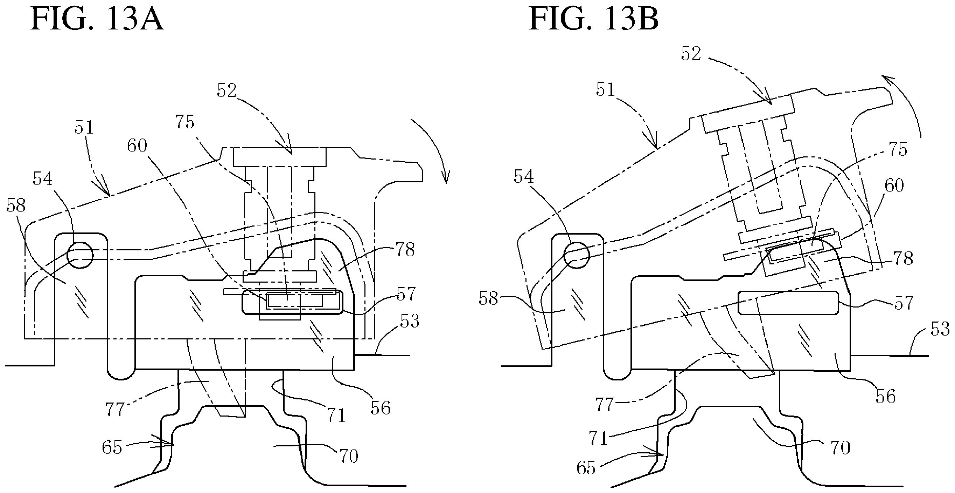

Note that, the lock position of the lock lever refers to the rotation position where a cam 75 of a key cylinder 52, which will be described later, agrees with and thereby becoming capable of engaging with a first lock hole 57 provided at the lock plate 53 (see FIG. 13A).

The unlock position of the lock lever 51 refers to the rotation position where the cam 75 is displaced from the first lock hole 57 and thereby becoming incapable of engaging (see FIG. 13B).

In the following, a description will be given of the lock mechanism of the second pannier box 18. In FIGS. 10 and 11, the lock plate 53 extends in the front-rear direction in parallel with the upper side 35, and has its periphery fastened to the inner lateral surface 18b by screws 55. The upper part of the lock plate 53 extends upward further than the upper side 35. At part of the upper part of the lock plate 53 overlaid on the lock lever 51, a lock wall 56 and a support wall 58 are provided to project upward so as to enter inside the lock lever 51.

A first lock hole 57 is provided at the lock wall 56. When the lock lever 51 is rotated to reach the lock position, the first lock hole 57 coincides with a second lock hole 60 provided at a rear end lower part of the inner lateral wall 59 of the lock lever 51 (see the encircled part B in FIG. 11). The inner lateral wall 59 forms part of the outer circumferential wall of the lock lever 51 and oriented toward the inside of the vehicle body.

The front upper part of the inner lateral wall 59 is mounted on the support wall 58 through the pivot shaft 54 extending in the right-left direction. The lock lever 51 is rotatable about the pivot shaft 54.

In the present embodiment, at the unlock position of the lock lever, the second lock hole 60 is displaced from the first lock hole 57. At the lock position of the lock lever, the second lock hole 60 coincides with the first lock hole 57 of the lock wall 56, allowing the cam 75 to engage.

The lower part of the lock plate 53 is cut out in an intermediate part in the front-rear direction. The engagement lever 61 is disposed to extend in the front-rear direction along the cutout part. The engagement lever 61 has its opposite ends in the length direction rotatably supported on erected parts 62 of the lock plate 53 by pivots 63 in the front-rear direction. In the vicinity of the lock lever 51 of the engagement lever 61, a lock part 65 whose cross-sectional shape is substantially U-shaped is provided.

The state where the upper opening of the lock part 65 is oriented upward is the upright state of the engagement lever 61 (see the state represented by solid lines in FIG. 12). The state where the upper opening is tilted by, for example, about 45° is the fallen state of the engagement lever 61 (see the state represented by phantom lines in FIG. 12). The engagement lever 61 is biased to rotate in the falling direction by a spring 64. The fallen angle can be arbitrarily set.

Note that, FIG. 12 shows the lock part 65 while omitting the intermediate stay and the sub-stay.

As shown in FIG. 12, the upper side 35 of the pannier stay 31 fits into the lock part 65. The lower surface of the upper side 35 is supported by a spacer 66. The surface of the spacer 66 forms a substantially arc-shaped recess. The spacer 66 sets the upper side 35 in the vicinity of the upper opening. More specifically, the spacer 66 is not just in the lock part 65 but provided across substantially the entire length of the engagement lever 61, and fixed by the fastening member 68 from the bottom surface of the engagement lever 61 having a cushion 67 interposed. Note that, the height of the inner lateral surface (the surface on the vehicle body side) of the spacer 66 varies in the length direction, and becomes highest at the opposite ends.

In the cross section shown in FIG. 12, an inner lateral wall 69 (the surface on the vehicle body side) out of an opposite pair of upright walls of the lock part 65 is slightly lower than the top of the upper side 35, whereas an outer lateral wall 70 (on the pannier box 18 side) is slightly higher than the top of the upper side 35.

A portion of the lock plate 53 overlaid on the lock part 65 is provided with a cutout 71, where the outer lateral wall 70 in the upright state sets in.

In the upper part of the lock plate 53, a portion in the vicinity of the upper edge of the outer lateral wall 70 in the upright state and located substantially below the lock lever 51 in the locking state (see FIGS. 10, 11 and 13A) extends upward and forms the lock wall 56 including the cutout 71. That portion bent inward in the vicinity of the lower end of the lock lever 51 to form a horizontal part 72 which extends outward. The lock wall 56 is formed therefrom by the portion being bent upward again. The lock wall 56 largely projects upward along the inner surface of the inner lateral wall 59 of the lock lever 51.

An upper part of the lock lever 51 is narrowed from the step part 73, where an upper part of the key cylinder 52 is fixed.

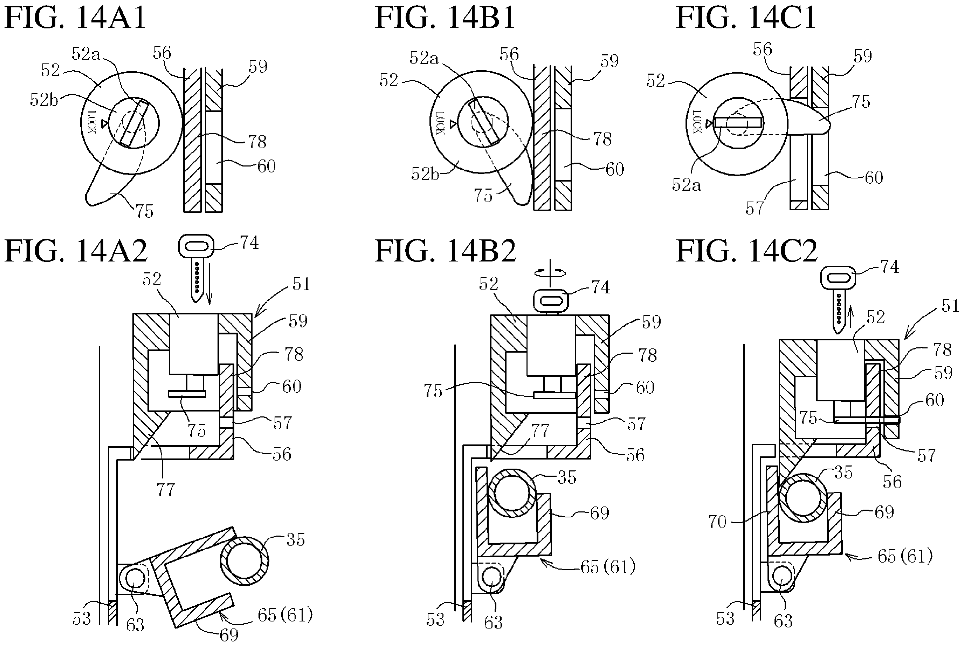

The lower half of the key cylinder 52 projects into a cam chamber 51a provided in the lock lever 51, which cam chamber 51a is the space below the step part 73. The cam 75 is rotatably provided at the lower end of the cam chamber 51a. The cam 75 is rotated in accordance with operations with the key 74 (see FIGS. 14A1 to 14C2) inserted into the key cylinder 52.

When the key 74 is set in the lock position (see FIGS. 14A1 to 14C2) on the key cylinder and the lock lever 51 is also in the lock position, the cam 75 enters the first lock hole 57 and the second lock hole 60 to lock the lock lever 51 so as not to rotate. Note that, the second lock hole 60 is not essential and may be omitted.

Note that, in order to ensure locking with the key 74, when the key 74 is rotated in the locking direction, the key 74 is removable just when it reached the lock position on the key cylinder and not removable in any other positions.

The lock wall 56 extends upward further than the first lock hole 57 to the vicinity of the step part 73. This portion higher than the first lock hole 57 forms an extension 78. The extension 78 allows the cam 75 to rotate in the locking direction only when the first lock hole 57 of the lock wall 56 and the second lock hole 60 of the inner lateral wall 59 at the lock lever 51 coincide with each other. The extension 78 restricts the rotation of the cam 75 to prevent entry into the second lock hole 60 when the first lock hole 57 of the lock wall 56 is displaced from the second lock hole 60 of the inner lateral wall 59.

Accordingly, the extension 78 is a portion of the lock wall 56 which is higher than the first lock hole 57 and which closes the second lock hole 60.

When the first lock hole 57 and the second lock hole 60 do not coincide with each other, the extension 78 prevents the cam 75 from extending on the rotation path and entering the second lock hole 60, and avoids removal of the key 74.

That is, the extension 78 also functions to prevent the user from misidentifying the locking (misidentifying the lock lever 51 failing to reach the lock position, that is, failing to engage with the lock part 65, as attaining the lock position).

The rotation restriction range on the cam 75, that is, a rotation angle θ (see B in FIG. 11) of the lock lever 51 can be arbitrarily set by adjusting the dimension of the extension 78. Here, when the angle θ is the angle formed between a line connecting between the second lock hole 60 and the pivot shaft 54 and a line connecting between the first lock hole 57 and the pivot shaft 54, the angle θ is preferably set to be a relatively small angle which may tends to be visually overlooked and cause the user to misidentify incomplete locking as complete locking. Thus, the extension 78 may be relatively small in area.

An outer lateral wall 76 of the lock lever 51 extends downward, and its tip forms a lock hook 77. When the lock lever 51 is rotated to reach the lock position, the lock hook 77 is overlaid on the upper part of the outer lateral wall 70 of the lock part 65 which is previously set upright by the engagement lever 61 being rotated, thereby prohibiting the lock part 65 from rotating to the fallen position. By the lock lever 51 in this state being locked by the key cylinder 52, the lock mechanism 50 enters the locked state. Thus, the pannier box 18 becomes incapable of being removed from the pannier stay 31.

In this locked state, when the cam 75 is rotated with the key to leave the first lock hole 57 and the second lock hole 60, the locking on the lock lever 51 by the key cylinder 52 is cancelled. Thus, the lock mechanism 50 enters the unlocked state. As shown in the encircled part B in FIG. 11, when the lock lever 51 is rotated clockwise to disengage the lock hook 77 from the outer lateral wall 70 of the lock part 65, as the engagement lever 61 is biased to rotate in the falling direction by the spring 64, the lock part 65 rotates about the pivots 63 to reach the fallen position. Thus, removal of the pannier box 18 from the pannier stay 31 is permitted.

Note that, it is not essential for the lock mechanism 50 to include the engagement lever 61 and the lock hook 77. In the present application, the lock hook 77 (or part of the lock lever 51) engaging with the pannier stay (the box stay) includes the lock hook 77 (or part of the lock lever 51) indirectly engaging with the pannier stay 31 via the lock part 65. This state is referred to as the lock lever 51 engaging with the pannier stay (the box stay).

FIGS. 13A and 13B are explanatory illustrations describing the relationship between the lock lever 51 in the lock position and the unlock position and the lock wall 56, with reference to the lock lever in the state shown in FIG. 11. FIG. 13A shows the lock position of the lock lever 51. FIG. 13B shows the unlock position of the lock lever 51. Note that, the lock lever 51 is represented by phantom lines.

In FIG. 13A, the lock lever 51 has rotated to the lock position. Here, the lock lever 51 has rotated about the pivot shaft 54 clockwise in the drawing, and its lower end is substantially horizontal in the drawing. The second lock hole 60 is overlaid on the first lock hole 57 of the lock wall 56. Simultaneously, the lock hook 77 is overlaid on thereby engaging with the outer lateral wall 70 of the lock part 65, to restrict upward rotation of the outer lateral wall 70 in the drawing.

By the lock part 65 being in the upright position, the outer lateral wall 70 enters the cutout 71 of the lock plate 53. In this state, when the key cylinder 52 is set in the lock position, the cam 75 engages with both of the first lock hole 57 and the second lock hole 60, to restrict rotation of the lock lever 51.

In FIG. 13B, the lock lever 51 is rotated to reach the unlock position. Here, the lock lever 51 has rotated counterclockwise in the drawing about the pivot shaft 54 and its lower end is inclined upward toward the right side in the drawing, and the second lock hole 60 is displaced upward from the first lock hole 57 of the lock wall 56. Simultaneously, the lock hook 77 disengages from the outer lateral wall 70 of the lock part 65 to release the outer lateral wall 70, allowing the outer lateral wall 70 to rotate upward in the drawing.

Prior to the rotation of the lock lever 51, the key cylinder 52 is set in the unlock position and the cam 75 leaves both of the first lock hole 57 and the second lock hole 60.

While the positional relationship between the second lock hole 60 and the cam 75 during the rotation of the lock lever 51 remains unchanged, the extension 78 exists between the cam 75 and the second lock hole 60 so long as the second lock hole 60 is on the extension 78. Thus, the cam 75 is prevented from rotating in the engaging direction with the second lock hole 60 (see FIG. 14B1), and the key cylinder 52 is prevented from rotating to attain the lock position (see FIG. 14B2).

The extension 78 should cover just the range above the first lock hole 57 including the shift path of the second lock hole 60. This range should be just the range where restriction on shifting of the cam 75 is desired out of the rotating range of the lock lever 51. Thus, a relatively small bump-like projecting area of the extension 78 will suffice.

FIGS. 14A1 to 14C2 show key operations on the key cylinder 52. The drawings in the upper row show the key cylinder 52 as seen from above, and the drawings in the lower row are the cross-sectional views of the sites corresponding to FIG. 12 associated with the key operations. FIGS. 14A1 and 14A2 show the state of the unlock position with the lock part 65 being in the fallen position. FIGS. 14B1 and 14B2 show the state of the unlock position with the lock part 65 being in the upright position. FIGS. 14C1 and 14C2 show the state of the lock position. Note that, the drawings in the lower row are simplified and schematically illustrated as compared to FIG. 12.

Firstly, in FIG. 14A1, a key groove 52a is provided at the center in the upper surface of the key cylinder 52. When the key 74 is inserted into the key groove 52a, a central rotor part 52b rotates. The key groove 52a rotates according to the rotor part 52b.

At a specific position on the upper surface of the key cylinder 52 outer than the rotor part 52b, letters "LOCK" and an alignment mark (for example, a triangular mark) are engraved. When an end of the key groove 52a is aligned with the alignment mark, the key cylinder attains the lock position.

Note that, when the key cylinder attains the lock position, the key 74 may be inserted or removed. There exist just one lock position on the key cylinder. Any position on the upper surface of the key cylinder 52 other than the lock position is the unlock position where the key 74 cannot be removed.

In FIGS. 14A1 and 14A2, the lock lever 51 and the key cylinder 52 are both in the unlock position. The first lock hole 57 is displaced from the second lock hole 60 and hence the extension 78 closes the second lock hole 60. The key 74 is operated to start rotating, and the cam 75 is far from the second lock hole 60.

In FIG. 14A2, the key 74 is illustrated to be inserted in the unlock position for the sake of convenience. Practically, the key 74 can be inserted or removed just in the lock position on the key cylinder, and the key 74 remains inserted into the key cylinder 52 in the unlock position. Here, as shown in FIG. 14A2, the lock lever 51 is in the unlock position, with the lock hook 77 releasing the lock part 65 and the lock part 65 in the fallen state.

FIGS. 14B1 and 14B2 show the incomplete lock state where: the lock lever 51 and the key cylinder 52 are in the unlock position; the cam 75 is rotated to abut on the extension 78; and the lock part 65 is in the upright state with the lock hook 77 failing to be in engagement. While this state tends to let the user misidentify it as the locked state, the rotation of the key cylinder 52 is restricted by the extension 78 and the key cylinder 52 cannot rotate to reach the lock position. By the key 74 being not removable, the user becomes aware of the incomplete locking of the lock mechanism 50, and is lead to complete locking.

FIGS. 14C1 and 14C2 show the lock lever 51 and the key cylinder 52 both in the lock position. The first lock hole 57 coincides with the second lock hole 60 and the cam 75 penetrates through both of them, allowing the key cylinder 52 to rotate to reach the lock position. The lock hook 77 engages with the lock part 65 and restricts the rotation toward the fallen side. As a result, the locking of the lock mechanism 50 is completed, which can be recognized by the user allowed to remove the key 74.

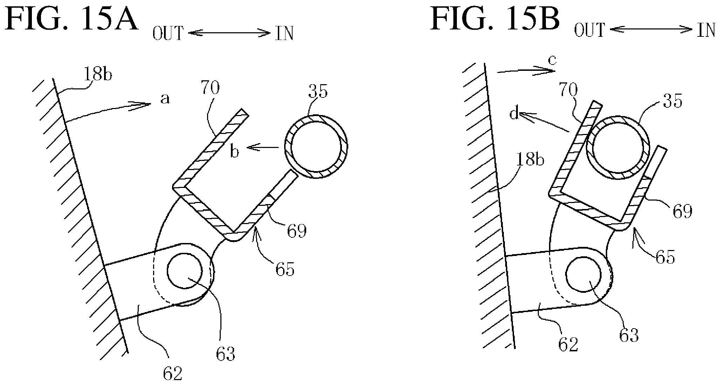

FIGS. 15A and 15B are illustrations for describing the relationship between the operations of the lock part 65 and the upper side 35 of the pannier stay 31. Similarly to FIG. 12, in FIGS. 15A and 15B, the members are simplified and schematically illustrated. In the following, a description will be given of the second pannier box 18, and the same holds true for the left side.

FIG. 15A shows an initial stage of mounting the pannier box (by the inner lateral surface 18b, the same holds true for the following) on the pannier stay 31. While the lock part 65 is in the fallen state, the pannier box has its lower part previously engaged with the lower side 37. About this engaged point, the upper part of the pannier box is rotated toward the upper side 35 (see FIG. 7).

Here, while the lock part 65 is in the fallen position, the inner lateral surface 18b of the pannier box is tilted to be increasingly spaced apart from the upper side 35. Therefore, the tip of the lock part 65 is in the vicinity of the upper side 35. When the inner lateral surface 18b of the pannier box is rotated toward the upper side 35 as indicated by arrow a, the upper side 35 enters the lock part 65 as indicated by arrow b.

FIG. 15B shows the state where the pannier box is further rotated from the state in FIG. 15A toward the upright position. When the inner lateral surface 18b of the pannier box is further rotated toward the upper side 35 as indicated by arrow c, the upper side 35 presses the lock part 65 as indicated by arrow d, to set the lock part 65 upright against the spring 64 (FIG. 10).

When the pannier box is set upright, the lock part 65 attains the upright position. When the lock part 65 engages with the lock hook 77, the lock part 65 becomes incapable of rotating and the pannier box is fixedly engaged with the pannier stay 31.

Thereafter, when the key cylinder 52 is set in the lock position, the lock state shown in FIG. 12 is attained.

Next, a description will be given of the procedure of mounting the pannier boxes on the vehicle. Firstly, the right and left pannier stays 30, 31 are respectively mounted on the right and left sides of the vehicle body. The left pannier stay 30 has the front and rear upper hooks 32a, 32b provided at the upper side 35 aligned with the corresponding upper engagement recesses 24 from above. The joint 40 of the lower side 37 is overlaid on the holder extension 41. Then, the whole structure is pressed downward so that engagement is established at three points. Next, the sub-stay 47 having its fuse hook 48 at its tip fitted into the lower engagement recess 25 is fastened to the intermediate stay 38. Thus, the left pannier stay 30 is mounted on the vehicle body. The right pannier stay 31 is similarly mounted on the right side of the vehicle body.

Thereafter, the lateral sides 36b on the rear side of the right and left pannier stays 30, 31 are coupled to each other by the cross pipes 34a, 34b.

Subsequently, the first pannier box 17 and the second pannier box 18 are mounted on the left and right pannier stay 30, 31, respectively. The first pannier box 17 slightly inclined toward the user has its lower hooks 46a, 46b aligned with the mounts 37a, 37b provided at the lower side 37 of the pannier stay 30. Then, the first pannier box 17 is pushed downward, to be engaged.

Next, by the pannier box 17 being rotated about the engaged portion with the lower side 37 so as to be upright, the upper side 35 is fitted into the lock part 65. Thus, the pannier box 17 as a whole is fixedly engaged with the pannier stay 30. Here, when the lock lever 51 is set in the lock position and the key cylinder 52 is set in the lock position, the lock lever 51 is locked in the lock position, and the pannier box 17 is locked as being supported on the vehicle body (the pannier stay 30).

The same holds true for the second pannier box 18. The removal is performed in reverse order.

This lock mechanism 50 may be provided not just for the pannier boxes (17, 18) provided on the right and left sides on the vehicle body, but also for any of various types of onboard storage boxes provided around the seat 15, such as a top box mounted behind the rear seat 15b.

For example, the lock mechanism 50 may be provided for a top box 90 represented by phantom lines in FIG. 1. The top box 90 includes an opening at its top, which is openably closed with a lid 91 from above. A bottom part 92 of the top box 90 is supported on the rear carrier 16 through a box stay 93.

The box stay 93 is a frame-like member similarly to the pannier stay 30. The box stay 93 has its front part, which is substantially parallel to the upper surface of the rear carrier 16, overlaid and fixed onto the rear upper surface of the rear carrier 16. The box stay 93 has its rear part extended rearward from the rear carrier 16.

The top box 90 has its bottom part 92 placed on the box stay 93 and engaged thereby supported thereon. The rear part of the top box 90 extends rearward than the rear wheel 5.

The bottom part 92 of the top box 90 has its front part engaged with the box stay 93 from above, and has its rear end locked to the rear end of the box stay 93 by the lock mechanism 50. The lock mechanism 50 is configured similarly to that for the pannier boxes and, therefore, denoted by an identical reference character.

The lock mechanism 50 is configured substantially similarly to the lock mechanism 50 for the pannier boxes described above. While not detailed in FIG. 1, the lock mechanism 50 includes the lock lever 51 and the key cylinder 52, the engagement lever 61 and the lock part 65, and the lock hook 77 shown in FIG. 12 and others, each of which similarly functions. Note that, FIG. 1 does not show the reference characters of these elements.

The lock lever 51 is laterally disposed with the key groove of the key cylinder 52 oriented rearward, and rotated about the pivot shaft mounted from below the rear end of the bottom part 92. The key is operated on the key cylinder 52 from the rear side.

The bottom part 92 near the lock lever 51 is provided with a member similar to the engagement lever 61. This member is rotatable relative to the bottom part 92 and engages with the rear end of the box stay 93. In the state being engaged with the rear end of the box stay 93, the member is locked by the lock lever 51 so as to be incapable of rotating.

Accordingly, this lock mechanism 50 is useful in locking not only the pannier box but also any of various onboard storage boxes provided around the seat 15 such as the top box 90, preventing the erroneous operation of the lock lever.

Next, a description will be given of coupling between the first pannier box 17 and the second pannier box 18. The foregoing description has been given of the first pannier box 17 and the second pannier box 18 mounted on the vehicle. Here, the first pannier box 17 and the second pannier box 18 when dismounted from the pannier stays 30, 31 can be carried separately from the vehicle body or used as a chair or the like.

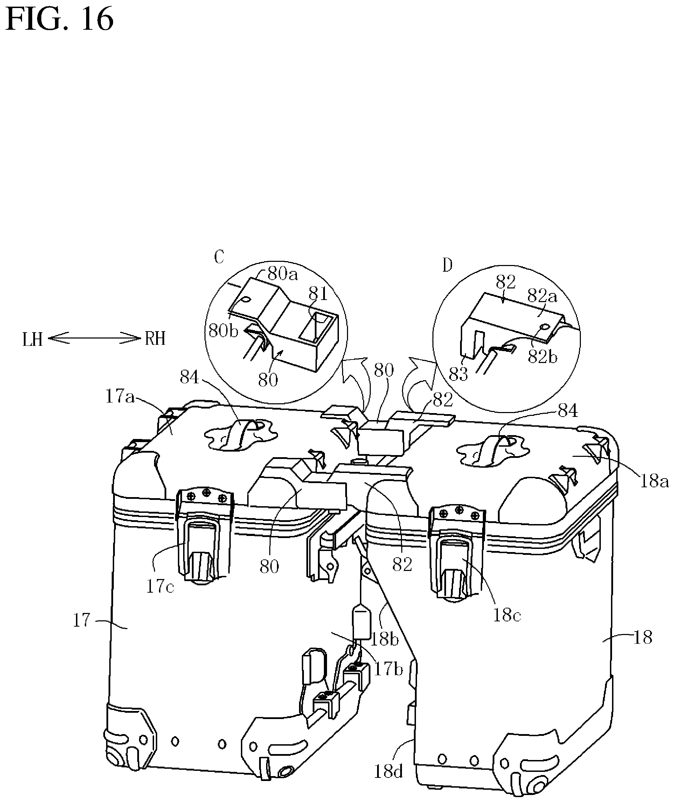

FIG. 16 shows an exemplary structure of the integrally coupled first pannier box 17 and second pannier box 18 when dismounted from the vehicle body.

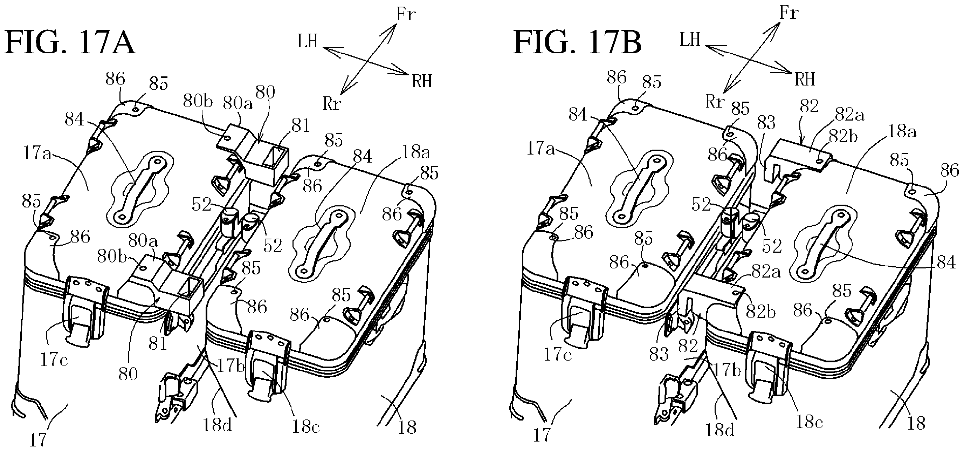

FIG. 17A shows the state where first coupling members 80 are provided just at the first pannier box 17. FIG. 17B shows the state where second coupling members 82 are provided just at the second pannier box 18.

In these drawings, in the top surfaces of the first pannier box 17 and the second pannier box 18, on the front and rear sides of sides at the inner lateral surfaces 17b, 18b, the first coupling members 80 and the second coupling members 82 are provided so as to project to each other.

Encircled parts C and D in FIG. 16 respectively show the enlarged perspective view of the coupling members 80, 82. An engagement hole 81 is provided at the first coupling member 80, and an engagement projection 83 engaging with the engagement hole 81 is provided at the second coupling member 82. The engagement hole 81 and the engagement projection 83 extend in the top-bottom direction.

With the inner lateral surfaces 17b, 18b being opposed to each other, the first pannier box 17 and the second pannier box 18 are closely juxtaposed to each other. Thus, by the engagement projections 83 engage with the engagement holes 81, the first pannier box 17 and the second pannier box 18 are integrally coupled to each other. Here, the engagement holes 81 and the engagement projections 83 engage with each other in the top-bottom direction. Thus, the coupling is easy.

Here, as shown in FIGS. 17A and 17B, the first coupling members 80 are mounted on two corner fittings 86 at the inner lateral surface 17b, out of the corner fittings 86 respectively provided for reinforcing the corners of the lid 17a. Each first coupling member 80 includes a mount arm 80a overlaid on the corner fitting 86. Having the mount arm 80a overlaid on the corner fitting 86, each first coupling member 80 is mounted on the corner fitting 86 with a long screw 80b.

The corner fittings 86 are previously mounted on the lid 17a with short screws 85. Therefore, replacing the short screws 85 by the long screws 80b allows the first coupling members 80 to be fastened to the lid 17a by the long screws 80b together with the corner fittings 86. The first coupling members 80 each project by the dimension substantially corresponding to the lateral width of the key cylinder 52 (the width in the right-left direction when mounted) at the lateral surface of the lid 17a on the inner lateral surface 17b side (see FIG. 17A).

The second coupling members 82 are mounted on two corner fittings 86 at the inner lateral surface 18b, out of the corner fittings 86 respectively provided for reinforcing the corners of the lid 18a. Each second coupling member 82 includes a mount arm 82a overlaid on the corner fitting 86. Having the mount arm 82a overlaid on the corner fitting 86, each second coupling member 82 is fastened to the lid 18a by the long screw 82b together with the corner fitting 86. The second coupling members 82 each project by the dimension substantially corresponding to the width of the key cylinder 52 (the width in the right-left direction when mounted) at the lateral surface of the lid 18a on the inner lateral surface 18b side (see FIG. 17B).

Accordingly, having their respective inner lateral surfaces 17b, 18b opposed to each other, the first coupling members 80 and the second coupling members 82 opposed to each other are integrally coupled to each other by the engagement between the engagement projections 83 and the engagement holes 81 in the top-bottom direction, with a clearance corresponding to the sum of the projecting dimension of the first coupling members 80 and that of the second coupling members 82. This clearance houses the key cylinders 52 respectively mounted on the inner lateral surfaces 17b, 18b as being juxtaposed to each other in the right-left direction.

In this manner, when dismounted from the vehicle body, the first pannier box 17 and the second pannier box 18 being integrally coupled to each other allow the user to carry the pannier boxes collectively, holding handles 84 at the top surfaces of the lids 17a, 18a. Thus, easier handling is realized.

The first pannier box 17 and the second pannier box 18 being coupled to each other are useful as a chair or a table.

Here, the second pannier box 18 and the first pannier box 17 agree with each other in the longitudinal and lateral dimension of the lid 18a and the height as a whole. Therefore, the upper surface of the lid 18a in the coupled state forms a substantially continuous flat plane with the upper surface of the lid 17a, free of steps or the like due to a difference in height. Additionally, the lids 17a, 18a of the pannier boxes have substantially rectangular shapes of similar shape and size as seen in a top view. Hence, when coupled, the lids form a substantially rectangular ordered shape with one side being substantially doubled. Thus, the pannier boxes are readily and conveniently used as a table or the like.

The first pannier box 17 is substantially rectangular prism-shaped and self-standing when dismounted from a vehicle and placed on the ground or the like. In particular, the pannier boxes according to the present embodiment are each vertically elongated substantially rectangular prism-shaped which may not easily be self-standing. Here, by being coupled to each other, the pannier boxes become stably self-standing.

The second pannier box 18 is provided with the clearance recess 18d for the muffler 28.

The clearance recess 18d corresponds to the shape obtained by hollowing part of the inner lower part of the substantially rectangular-prism shape of the first pannier box 17. Therefore, the lower part is narrowed.

The second pannier box 18 with such a shape tends to fall when placed on the ground or the like, and difficult to be used alone in a self-standing manner.

While the second pannier box 18 has such a shape being difficult to be self-standing, when the second pannier box 18 and the first pannier box 17 are coupled to each other, the coupled pannier boxes 17, 18 as an integrated structure can be self-standing. As a result, despite the second pannier box 18 being prone to fall, the second pannier box 18 can be stably used in a self-standing manner if coupled to other pannier box.

Provided that both the right and left pannier boxes has such a shape difficult to be self-standing like the second pannier box 18, they can be used in a self-standing manner when coupled to each other.

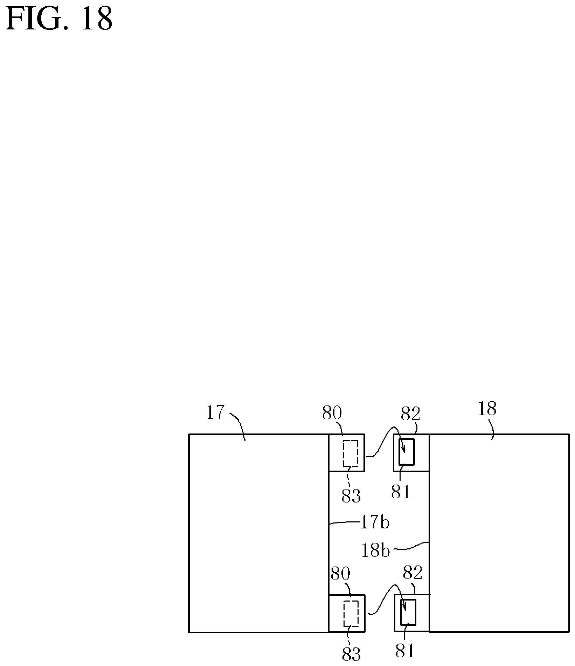

Note that, the first coupling members 80 and the second coupling members 82 are not specified to those described above, and various variations may be made. FIGS. 18 to 20 show such variations, and are schematic top views of the first pannier box 17 and the second pannier box 18. The left and right coupling members 80, 82 are also schematically shown.

FIG. 18 shows a variation in which an engagement projection 83 is provided for each first coupling member 80, and an engagement hole 81 is provided for each second coupling member 82. This variation realizes coupling by the top-bottom direction engagement similarly to the embodiment shown in FIGS. 16, 17A, and 17B.

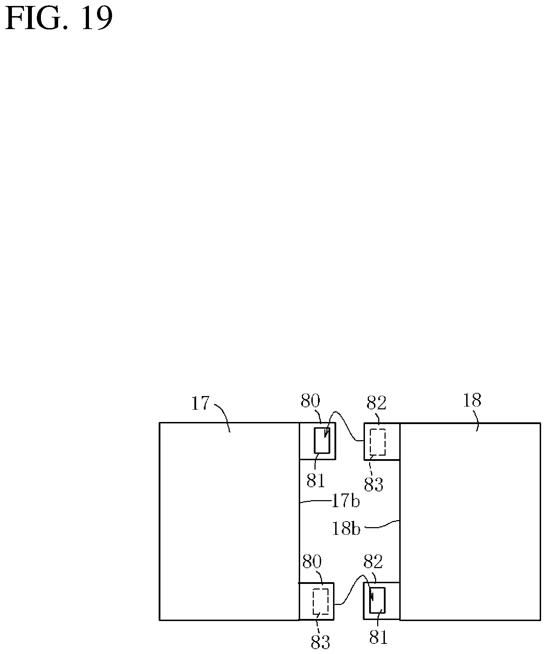

FIG. 19 shows a variation in which an engagement hole 81 is provided at one of the front and rear pair of first coupling members 80, and an engagement projection 83 is provided at the other one of the pair. An engagement projection 83 is provided at the second coupling member 82 opposing to the first coupling member 80 provided with the engagement hole 81, and an engagement hole 81 is provided at the second coupling member 82 opposing to the first coupling member 80 provided with the engagement projection 83. This variation similarly realizes coupling by the top-bottom direction engagement of the first coupling members 80 and the second coupling members 82 opposing to each other.

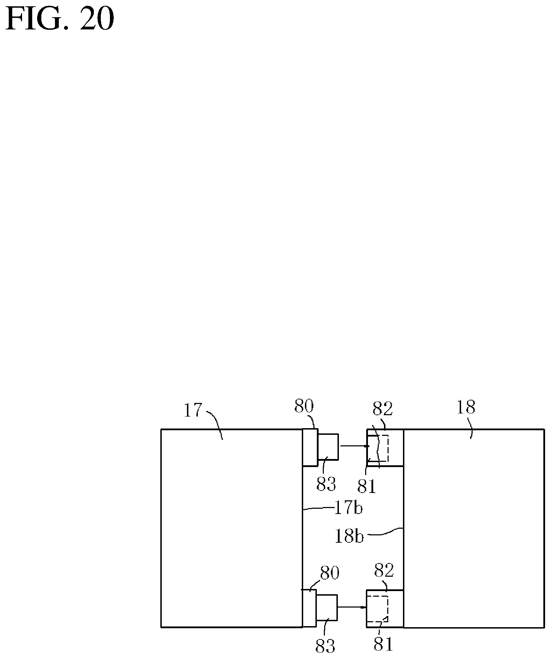

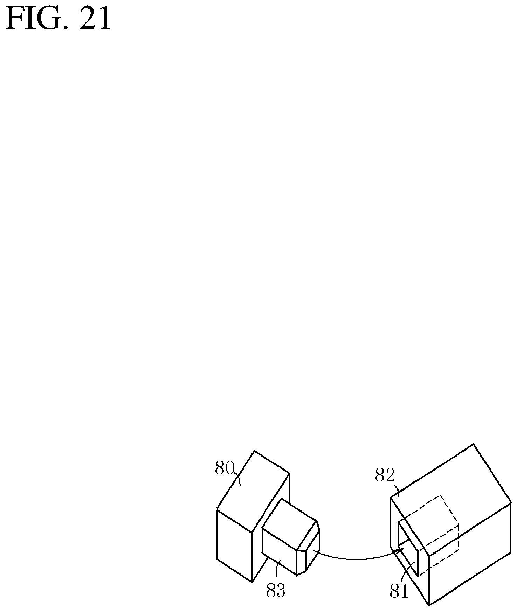

FIG. 20 shows a variation in which coupling is realized by engagement by insertion in the right-left direction. FIG. 21 shows the first coupling member 80 and the second coupling member 82 in this variation. A description will be given with reference to FIG. 21. The first coupling member 80 is provided with the engagement projection 83 at its tip so as to project horizontally toward the opposing second coupling member 82. On the other hand, the second coupling member 82 is provided with the engagement hole 81 into which the engagement projection 83 is horizontally inserted, and opens toward the first coupling member 80.

When the first coupling member 80 and the second coupling member 82 are opposed to each other, and the engagement projection 83 is horizontally inserted into the engagement hole 81, the first coupling member 80 and the second coupling member 82 engage with each other by insertion in the right-left direction. Since any shifting in the top-bottom direction is not required in engaging, easier coupling is provided also with the pannier boxes of heavy weight.

The variations shown in FIGS. 18 and 19 can be applied to the present variation.

In this manner, as shown in FIGS. 16, 17A, and 17B, when the first pannier box 17 and the second pannier box 18 are dismounted from the vehicle body, coupling the first pannier box 17 and the second pannier box 18 to each other by the first coupling members 80 and the second coupling members 82 facilitates the pannier boxes placed on the ground or the like to be self-standing.

As shown in FIGS. 16, 18, and 19, to one of the first coupling members 80 provided at the first pannier box 17 and the second coupling members 82 provided at the second pannier box 18, the engagement holes 81 extending in the top-bottom direction are provided. To the other one, the engagement projections 83 extending in the top-bottom direction and releasable engaging with the engagement holes 81 are provided. Thus, the first coupling members 80 and the second coupling members 82 can be coupled to each other by engagement in the top-bottom direction. That is, the coupling work is facilitated.

As shown in FIGS. 16 to 20, the first coupling members 80 and the second coupling members 82 are provided on the inner side of the first pannier box 17 and the second pannier box 18, respectively, and the first pannier box 17 and the second pannier box 18 are coupled to each other having the inner lateral surfaces 17b, 18b opposed to each other. Thus, the first coupling members 80 and the second coupling members 82 are housed between the inner lateral surfaces 17b, 18b. By virtue of the projections such as the coupling members being housed between the pannier boxes, the appearance becomes neat and use as a chair or a table is facilitated. That is, the appearance when coupled improves.

As shown in FIGS. 2 and 16, the muffler 28 is provided on one vehicle body side below the seat 15. The clearance recess 18d for keeping clear of the muffler 28 is provided at the inner lateral surface of the pannier box on the same side as the muffler (in the present embodiment, at the inner lateral surface 18b of the second pannier box 18).

This narrows the lower part of the pannier box 18 provided with the clearance recess 18d for the muffler, and makes it difficult for the pannier box 18 to be self-standing. Here, when the first pannier box 17 and the second pannier box 18 are integrally coupled to each other, the pannier box 18 which otherwise cannot easily be self-standing can be used in a self-standing manner.

As shown in FIG. 16 and others, the first pannier box 17 and the second pannier box 18 respectively include the openings at their top and the lids 17a, 18a which close the openings while being openable upward. Thus, any article may be put from the top in the first pannier box 17 and the second pannier box 18 being coupled to each other to facilitate use in a self-standing manner, which respectively include the openings at their top and the lids 17a, 18a openable upward. That is, any article can be easily put in or taken out, and hence improved usability is provided.

Next, a description will be given of operations of the present embodiment.

As shown in FIG. 12, in engaging the second pannier box 18 with the pannier stay 31 previously mounted on the vehicle body and locking by the lock mechanism 50, the key 74 is allowed to be removed only in the complete lock state where the lock lever 51 is in the lock position and the cam 75 of the key cylinder 52 engages with the first and second first lock holes 57, 60 simultaneously.

When the lock lever 51 is in any other position and hence is in the unlock position, the extension 78 prevents the cam 75 from engaging with the second lock hole 60 and avoids rotation of the key cylinder 52. Thus, the key 74 becomes incapable of being removed.

The key 74 incapable of being removed alerts the user to the incomplete lock state. That is, the user is prevented from misidentifying the incomplete lock state as the complete lock state.

In the state where the pannier box 18 is engaged with the pannier stay 31 and the lock lever 51 is rotated to reach the lock position, the key cylinder 52 is rotated by the key 74 to cause the cam 75 to engage with the first lock hole 57 and the second lock hole 60 simultaneously. Thus, the lock mechanism 50 locks the engagement of the pannier box 18 with the pannier stay 31.

At the same time, the key cylinder 52 attains the lock position where the key 74 is allowed to be removed. Thus, the user can recognize the complete lock state.

On the other hand, in the state where the lock lever 51 is in the unlock position, when the key cylinder 52 is rotated by the key 74, the cam 75 abuts on the extension 78 and cannot engage with the second lock hole 60. Thus, the key cylinder 52 cannot rotate to reach the lock position and the key 74 is incapable of being removed.

Hence, the present embodiment prevents the user from misidentifying the incomplete locking, i.e., the lock lever 51 being in the unlock position, as the complete locking of the lock mechanism 50, implementing an anti-theft apparatus configured to avoid the erroneous operation of the lock lever 51 and to ensure locking the pannier boxes on the vehicle body.

The lock plate 53 is fixed to the pannier box 18. The lock lever 51 is rotatably supported by the pivot shaft 54 (FIGS. 13A and 13B) on the lock plate 53. The lock plate 53 rotatably supports the engagement lever 61 including the lock part 65 (the engaging piece) engaging with the pannier stay 31. The lock hook 77 of the lock lever 51 is configured to engage with the lock part 65 when the lock lever 51 is in the lock position.

In this configuration, when the engagement lever 61 is rotated; the lock part 65 is engaged with the upper side 35 of the pannier stay 31; and the lock lever 51 is in the lock position, the lock hook 77 of the lock lever 51 engages with the lock part 65 and stops the rotation of the lock part 65. Thus, the engagement of the pannier stay 31 with the lock part 65 is maintained, whereby the pannier box 18 is fixedly engaged with the pannier stay 31.

As shown in FIG. 8, the lock mechanism 50 couples between the upper parts of the pannier stay 31 and the pannier box 18, and is disposed between the seat 15 and the pannier box 18.

In this configuration, the lock mechanism 50 is housed in the space formed between the pannier box 18 and the seat 15 and, hence, the lock mechanism 50 is disposed in a space-saving manner.

Further, as shown in FIG. 7, at the lower part of the pannier box 17, the lower hook 46a for the lower side 37 of the pannier stay 30 is provided. About this fitting part between them, the pannier box 17 is rotatable in the right-left direction.

In this configuration, in mounting the pannier box 17 on the pannier stay 30, firstly, the lower part of the pannier box 17 is fitted to the lower side 37 of the pannier stay 30. In this state, about the fitting part at the lower part of the pannier box 17, the upper part of the pannier box 17 is rotated. This easily sets the pannier box 17 in the upright position, to be locked by the lock mechanism 50.

Dismounting is performed in reverse order. In this case also, by the upper part of the pannier box 17 being rotated about the lower part of the pannier box 17, the dismounting is easily performed. Accordingly, the pannier box 17 can be easily mounted or dismounted without effort.

As shown in FIGS. 3 and 4, in causing the pannier boxes (17, 18) to be supported on the lateral side of the rear frame, the pannier boxes (17, 18) are fixedly supported by the upper engagement recesses 24 provided at the upper part in the outer lateral surface of the carrier bracket 22. The pannier boxes (17, 18) can be supported using the carrier bracket 22. By virtue of the carrier bracket 22 being made of resin, the upper engagement recesses 24 are readily formed.

The outer side of the carrier bracket 22 being covered with the side covers 19 improves its appearance. Provision of the windows 19a where the upper engagement recesses 24 are exposed allows the pannier boxes to be engaged with the upper engagement recesses 24 despite the side covers 19 covering the carrier bracket 22.

As shown in FIG. 1, the lock mechanism 50 is applicable to the top box 90 supported on the rear carrier 16 behind the seat 15, which top box 90 is an onboard storage box other than the pannier boxes (17, 18). Thus, an anti-theft apparatus is implemented, which avoids the erroneous operation of the lock lever 51 and ensures locking the top box 90 onto the vehicle body.

Note that, the foregoing embodiment is merely of an exemplary nature. The present invention is only limited to the claims.

For example, a saddled vehicle to which the present invention is applied may be any of various vehicles such as a three-wheel automobile or a four-wheel automobile.

Various changes can be made in the lock mechanism 50 also. For example, the engagement lever 61 is not essential in the lock mechanism 50, and can be dispensed with when the lock hook 77 directly engages with the pannier stay 31. This lock hook 77 can also be dispensed with. In this case, part of the lock lever 51 should engage with the pannier stay 31.

The second lock hole 60 provided at the lock lever 51 is not essential also, and can be dispensed with.

The lock plate 53 may not be an element of the onboard box, and may be of the pannier stay (the box stay). The pannier stay (the box stay) may be dispensed with, and the onboard box may be directly locked onto the vehicle body frame including the seat rails 12 and the rear carrier 16 by the lock mechanism 50. In this case, the lock lever 51 directly engages with the vehicle body frame. By the cam 75 of the key cylinder 52 engaging with the first lock hole 57 of the lock plate 53 previously provided at the vehicle body frame, locking is attained.

### INDUSTRIAL APPLICABILITY

The present invention prevents the user from misidentifying the incomplete locking as the complete locking in locking a pannier box mounted onboard. The present invention is useful for a saddled vehicle provided with a pannier box.

### Reference Signs List

15: seat
16: rear carrier
17: first pannier box
18: second pannier box
22: carrier bracket
23a: rear grip
24: upper engagement recess
25: lower engagement recess
28: muffler
30: pannier stay
31: pannier stay
32a, 32b: upper hook
33a, 33b: upper hook
48: fuse hook
50: lock mechanism
51: lock lever
52: key cylinder
53: lock plate
61: engagement lever
65: lock part
74: key
75: cam
78: extension
80: first coupling projection
81: engagement hole
82: second coupling projection
83: engagement projection

## Claims

1. A saddled vehicle comprising:
a vehicle body frame;
a seat (15) disposed behind the vehicle body frame;
an onboard storage box (17, 18, 90) removably mounted around the seat;
a box stay (30, 31, 93) fixed to a vehicle body side around the seat (15) for supporting the onboard storage box; and
a lock mechanism (50) provided between the onboard storage box and the box stay, wherein
the lock mechanism (50) includes
a lock lever (51),
a key cylinder (52) provided at the lock lever,
a cam (75) mounted on the key cylinder and rotated by a key (74) inserted into the key cylinder (52),
a lock plate (53) provided with a first lock hole (57) configured to engage with the cam and previously fixed to the onboard storage box side or the box stay (30, 31, 93) side, and
an engaging part (77) provided at the lock lever (51) and configured to engage with the box stay, wherein
the lock lever (51) is rotatable between a lock position where the engaging part (77) engages with the box stay (30, 31, 93) and an unlock position where the engaging part disengages from the box stay,
the key (74) is rotatable between a lock position on the key cylinder where the cam (75) engages with the first lock hole (57) by being rotated by a predetermined amount and an unlock position on the key cylinder where the cam (75) is rotated by less than the predetermined amount,
when the key is operated to establish locking, the key becomes incapable of being removed from the key cylinder unless its rotated position attains the lock position on the key cylinder, **characterised in that**
the lock plate (53) partially includes an extension (78) extending to become spaced apart from the first lock hole (57) and projecting on a rotation path of the cam (75) in the unlock position of the lock lever (51), and
when the lock lever (51) is in the unlock position, the extension (78) projects on the rotation path of the cam (75) to cause the cam (75) to abut on the extension (78), preventing the key (74) to rotate to reach the lock position on the key cylinder (52).

2. The saddled vehicle according to claim 1, wherein
the lock plate (53) is fixed to the onboard storage box (17, 18, 90),
the lock plate (53) rotatably supports the lock lever (51),
the lock plate (53) rotatably supports an engagement lever (61) including an engaging piece (65) configured to engage with the box stay (30, 31, 93), and
the engaging part (77) engages with the engaging piece (65) when the lock lever (51) is in a proper engaging position where the lock lever (51) is in the lock position.

3. The saddled vehicle according to claim 1 or 2, wherein
the onboard storage box is a pannier box (17, 18) removably mounted on each of right and left sides of the seat, and
the box stay is a pannier stay (30, 31) fixed to the vehicle body side on each of lateral sides of the seat (15).

4. The saddled vehicle according to claim 3, wherein the lock mechanism (50) couples between an upper part of the pannier stay (30, 31) and an upper part of the pannier box (17, 18), and disposed between the seat and the pannier box (17, 18).

5. The saddled vehicle according to claim 4, wherein
the pannier box (17, 18) is provided with a fitting part at its lower part configured to fit with a lower part (37) of the pannier stay (30, 31), and
the pannier box (17, 18) is rotatable in a right-left direction about the fitting part.

6. The saddled vehicle according to claim 1, wherein a rotation angle (θ) of the lock lever (51) rotating between the lock position and the unlock position is adjusted to a range by which the extension (78) restricts the rotation of the cam (75).

## Patentansprüche

1. Sattelsitzfahrzeug, das aufweist:
einen Fahrzeugkarosserierahmen;
einen Sitz (15), der hinter dem Fahrzeugkarosserierahmen angeordnet ist;
einen am Fahrzeug befindlichen Aufbewahrungskasten (17, 18, 90), der entfernbar um den Sitz angebracht ist;
eine Kastenverstrebung (30, 31, 93), die an einer Fahrzeugkarosserieseite um den Sitz (15) befestigt ist, um den am Fahrzeug befindlichen Aufbewahrungskasten zu halten; und
einen Sperrmechanismus (50), der zwischen dem am Fahrzeug befindlichen Aufbewahrungskasten und der Kastenverstrebung vorgesehen ist,
wobei
der Sperrmechanismus (50) aufweist
einen Sperrhebel (51),
einen Schlüsselzylinder (52), der am Sperrhebel vorgesehen ist,
einen Nocken (75), der am Schlüsselzylinder angebracht ist und durch einen Schlüssel (74) gedreht wird, der in den Schlüsselzylinder (52) eingesetzt wird,
eine Sperrplatte (53), die mit einer ersten Sperröffnung (57) vorgesehen ist, die ausgestaltet ist, in den Nocken einzugreifen und zuvor an der Seite des am Fahrzeug befindlichen Aufbewahrungskastens oder der Seite der Kastenverstrebung (30, 31, 93) befestigt wurde, und
ein Eingriffsteil (77), das an dem Sperrhebel (51) vorgesehen ist und eingerichtet ist, in die Kastenverstrebung einzugreifen, wobei
der Sperrhebel (51) zwischen einer Sperrposition, in der das Eingriffsteil (77) in die Kastenverstrebung (30, 31, 93) eingreift, und einer Entsperrposition, in der das Eingriffsteil aus der Kastenverstrebung gelöst ist, drehbar ist,
der Schlüssel (74) zwischen einer Sperrposition am Schlüsselzylinder, in der der Nocken (75) in die erste Sperröffnung (57) eingreift, indem er um einen vorbestimmten Betrag gedreht wird, und eine Entsperrposition am Schlüsselzylinder, in der der Nocken (75) um weniger als den vorbestimmten Betrag gedreht ist, drehbar ist,
wenn der Schlüssel betätigt wird, um die Sperre zu errichten, ist es dem Schlüssel nicht mehr möglich, aus dem Schlüsselzylinder entfernt zu werden, außer die Drehposition davon erreicht die Sperrposition am Schlüsselzylinder,
**dadurch gekennzeichnet, dass**
die Sperrplatte (53) teilweise eine Fortsetzung (78) aufweist, die verläuft, um von der ersten Sperröffnung (57) beabstandet zu werden und an einem Rotationspfad des Nockens (75) in der Entsperrposition des Sperrhebels (51) hervorsteht, und,
wenn sich der Sperrhebel (51) in der Entsperrposition befindet, die Fortsetzung (78) am Rotationspfad des Nockens (75) hervorsteht, um den Nocken (75) zu veranlassen an der Fortsetzung (78) anzuliegen, was verhindert, dass sich der Schlüssel (74) dreht, um die Sperrposition am Schlüsselzylinder (52) zu erreichen.

2. Sattelsitzfahrzeug nach Anspruch 1,
wobei
die Sperrplatte (53) an dem am Fahrzeug befindlichen Aufbewahrungskasten (17, 18, 90) befestigt ist,
die Sperrplatte (53) den Sperrhebel (51) rotierbar hält,
die Sperrplatte (53) einen Eingriffshebel (61) rotierbar hält, der ein Eingriffsstück (65) aufweist, das ausgestaltet ist, in die Kastenverstrebung (30, 31, 93) einzugreifen, und das Eingriffsteil (77) in das Eingriffsstück (65) eingreift, wenn sich der Sperrhebel (51) in einer korrekten Eingriffsposition befindet, in der der Sperrhebel (51) in der Sperrposition ist.

3. Sattelsitzfahrzeug nach Anspruch 1 oder 2, wobei
der am Fahrzeug befindliche Aufbewahrungskasten ein Motorradkofferkasten (17, 18) ist, der entfernbar an einer jeden von der rechten und linken Seite des Sitzes angebracht ist, und
die Kastenverstrebung eine Motorradkofferverstrebung (30, 31) ist, die an der Seite der Fahrzeugkarosserie an jeder von den seitlichen Seiten des Sitzes (15) befestigt ist.

4. Sattelsitzfahrzeug nach Anspruch 3, wobei der Sperrmechanismus (50) zwischen einem oberen Teil der Motorradkofferverstrebung (30, 31) und einen oberen Teil des Motorradkofferkastens (17, 18) koppelt und zwischen dem Sitz und dem Motorradkofferkasten (17, 18) angeordnet ist.

5. Sattelsitzfahrzeug nach Anspruch 4,
wobei
der Motorradkofferkasten (17, 18) mit einem Einpassteil am unteren Endteil davon vorgesehen ist, das ausgestaltet ist, in ein unteres Teil (37) der Motorradkofferverstrebung (30, 31) einzupassen, und
der Motorradkofferkasten (17, 18) in einer Richtung nach links und rechts um das Einpassteil drehbar ist.

6. Sattelsitzfahrzeug nach Anspruch 1, wobei ein Rotationswinkel (θ) des Sperrhebels (51), der zwischen der Sperrposition und der Entsperrposition gedreht wird, auf einen Bereich eingestellt wird, um den die Fortsetzung (78) die Drehung des Nockens (75) beschränkt.

## Revendications

1. Véhicule à selle comprenant :
une ossature de carrosserie de véhicule ;
un siège (15) disposé derrière l'ossature de carrosserie de véhicule ;
une boîte (17, 18, 90) de stockage embarquée montée de manière amovible autour du siège ;
un montant (30, 31, 93) de boîte fixé à un côté de carrosserie de véhicule autour du siège (15) pour supporter la boîte de stockage embarquée ; et
un mécanisme de serrure (50) fourni entre la boîte de stockage embarquée et le montant de boîte, dans lequel
le mécanisme de serrure (50) comporte
un levier de verrouillage (51),
un barillet de serrure (52) fourni au niveau du levier de verrouillage,
une came (75) montée sur le barillet de serrure et tournée par une clé (74) insérée dans le barillet de serrure (52),
une plaque de verrouillage (53) dotée d'un premier trou de serrure (57) configuré pour venir en prise avec la came et fixée auparavant au côté de boîte de stockage embarquée ou au côté de montant (30, 31, 93) de boîte, et
une partie de mise en prise (77) fournie au niveau du levier de verrouillage (51) et configurée pour venir en prise avec le montant de boîte, dans lequel
le levier de verrouillage (51) est rotatif entre une position de verrouillage où la partie de mise en prise (77) vient en prise avec le montant (30, 31, 93) de boîte et une position de déverrouillage où la partie de mise en prise se libère du montant de boîte,
la clé (74) est rotative entre une position de verrouillage sur le barillet de serrure où la came (75) vient en prise avec le premier trou de serrure (57) en étant tournée d'une quantité prédéterminée et une position de déverrouillage sur le barillet de serrure où la came (75) est tournée de moins de la quantité prédéterminée,
lorsque la clé est actionnée pour établir le verrouillage, la clé devient incapable d'être retirée du barillet de serrure à moins que sa position tournée ne parvienne à la position de verrouillage sur le barillet de serrure, **caractérisé en ce que**
la plaque de verrouillage (53) comporte partiellement une extension (78) s'étendant pour devenir espacée du premier trou de serrure (57) et faisant saillie sur un trajet de rotation de la came (75) dans la position de déverrouillage du levier de verrouillage (51), et
lorsque le levier de verrouillage (51) est dans la position de déverrouillage, l'extension (78) fait saillie sur le trajet de rotation de la came (75) pour amener la came (75) à venir en butée sur l'extension (78), empêchant la clé (74) de tourner pour atteindre la position de verrouillage sur le barillet de serrure (52).

2. Véhicule à selle selon la revendication 1, dans lequel
la plaque de verrouillage (53) est fixée à la boîte (17, 18, 90) de stockage embarquée,
la plaque de verrouillage (53) supporte de manière rotative le levier de verrouillage (51),
la plaque de verrouillage (53) supporte de manière rotative un levier de mise en prise (61) comportant une pièce de mise en prise (65) configurée pour venir en prise avec le montant (30, 31, 93) de boîte, et
la partie de mise en prise (77) vient en prise avec la pièce de mise en prise (65) lorsque le levier de verrouillage (51) est dans une position de mise en prise correcte où le levier de verrouillage (51) est dans la position de verrouillage.

3. Véhicule à selle selon la revendication 1 ou 2, dans lequel
la boîte de stockage embarquée est une boîte (17, 18) sacoche montée de manière amovible sur chacun des côtés droit et gauche du siège, et
le montant de boîte est un montant (30, 31) de sacoche fixé au côté de carrosserie de véhicule sur chacune de faces latérales du siège (15).

4. Véhicule à selle selon la revendication 3, dans lequel le mécanisme de serrure (50) est couplé entre une partie supérieure du montant (30, 31) de sacoche et une partie supérieure de la boîte (17, 18) sacoche, et disposé entre le siège et la boîte (17, 18) sacoche.

5. Véhicule à selle selon la revendication 4, dans lequel
la boîte (17, 18) sacoche est dotée d'une partie d'ajustement au niveau de sa partie inférieure configurée pour s'ajuster sur une partie inférieure (37) du montant (30, 31) de sacoche, et
la boîte (17, 18) sacoche est rotative dans une direction droite-gauche autour de la partie d'ajustement.

6. Véhicule à selle selon la revendication 1, dans lequel un angle de rotation (θ) du levier de verrouillage (51) tournant entre la position de verrouillage et la position de déverrouillage est réglé sur une plage selon laquelle l'extension (78) limite la rotation de la came (75).
